(19) Europäisches Patentamt / European Patent Office / Office européen des brevets

(11) **EP 2 357 486 B1**

(12) **EUROPEAN PATENT SPECIFICATION**

(45) Date of publication and mention
of the grant of the patent:
**18.05.2016 Bulletin 2016/20**

(51) Int Cl.:
*G01S 5/18* (2006.01)      *G01S 5/30* (2006.01)
*E04G 21/04* (2006.01)      *F04B 45/06* (2006.01)
*B28C 7/16* (2006.01)      *B28C 1/16* (2006.01)

(21) Application number: **10835267.5**

(22) Date of filing: **25.06.2010**

(86) International application number:
**PCT/CN2010/074474**

(87) International publication number:
**WO 2011/069362 (16.06.2011 Gazette 2011/24)**

(54) **POSITION DETECTING DEVICE AND METHOD OF CONCRETE PUMP VEHICLE AND CONCRETE PUMP VEHICLE**

POSITIONSERKENNUNGSVORRICHTUNG UND -VERFAHREN FÜR EIN BETONPUMPENFAHRZEUG UND BETONPUMPENFAHRZEUG

PROCÉDÉ ET DISPOSITIF DE DÉTECTION DE LA POSITION D'UN VÉHICULE À POMPE À BÉTON ET VÉHICULE À POMPE À BÉTON

(84) Designated Contracting States:
**AL AT BE BG CH CY CZ DE DK EE ES FI FR GB GR HR HU IE IS IT LI LT LU LV MC MK MT NL NO PL PT RO SE SI SK SM TR**

(30) Priority: **09.12.2009 CN 200910250719**

(43) Date of publication of application:
**17.08.2011 Bulletin 2011/33**

(73) Proprietors:
• **Hunan Sany Intelligent Control Equipment Co., Ltd**
  **Hunan 410100 (CN)**
• **Sany Heavy Industry Co., Ltd.**
  **Changsha**
  **Hunan 410100 (CN)**

(72) Inventors:
• **YI, Xiaogang**
  **Hunan 410100 (CN)**
• **ZHOU, Xiang**
  **Hunan 410100 (CN)**
• **ZHOU, Jihui**
  **Hunan 410100 (CN)**
• **CHEN, Antao**
  **Hunan 410100 (CN)**
• **DENG, Qiulian**
  **Hunan 410100 (CN)**

(74) Representative: **Kopf, Korbinian Paul**
**Maiwald Patentanwalts GmbH**
**Elisenhof**
**Elisenstrasse 3**
**80335 München (DE)**

(56) References cited:
WO-A1-2008/110397      CN-A- 1 719 277
CN-A- 1 975 070      CN-A- 101 718 861
CN-Y- 201 266 322      US-A- 5 823 218
US-A1- 2009 190 441      US-A1- 2009 295 639
US-B1- 6 202 013

EP 2 357 486 B1

**Description**

FIELD OF THE INVENTION

The present invention relates to a detecting and controlling technology for a concrete pump truck, more particular to a device and a method for detecting position of a concrete pump truck, as well as a concrete pump truck having the device for detecting position of the concrete pump truck.

BACKGROUND OF THE INVENTION

The concrete pump truck is a common engineering machinery, which is used to transport concrete slurry to a predetermined site through a transporting pipe so as to perform concrete pouring work at a location far from a mixing station.

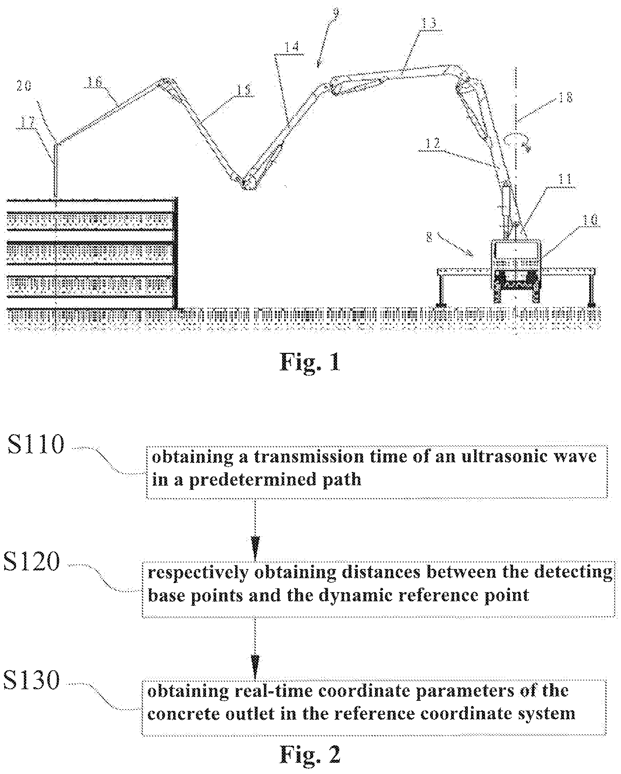

As shown in Fig. 1, an overall structural view of a concrete pump truck is shown. A boom system 8 of the concrete pump truck includes a base 10, a rotating platform 11 and a boom 9. For being convenient to site transfer in construction, the base 10 is generally mounted on a mobile chassis. The rotating platform 11 is mounted on the base 10 by a swiveling mechanism, and is rotated around a vertical axis 18 by a hydraulic motor. The boom 9 includes a plurality of boom segments which are hinged in sequence and a hose 17. In Fig. 1, the boom 9 includes five boom segments 12 to 16 which are hinged in sequence by hinge shafts and respectively named as a base boom 12, a second boom 13, a third boom 14, a fourth boom 15 and a distal segment boom 16, in which the lower end of the base boom 12 is hinged with the rotating platform 11, and the separation angle between the base boom 12 and the rotating platform 11 may be changed by one hydraulic cylinder, and respective boom segments may be rotated around the hinge shaft therebetween under driving of one hydraulic cylinder, and the hose 17 is connected to the boom distal end 20 of the distal segment boom 16 of the boom 9.

In concrete construction work, an operator controls the boom system 8 in an appropriate manner. The relative positions between the boom segments of the boom 9 may be controlled by adjusting the telescopic amount of the hydraulic cylinders, and the rotating angle of the rotating platform 11 may be controlled by the hydraulic motor, such that the boom distal end 20 with the hose 17 may reach above a predetermined concrete pouring position. The hose 17 is connected to a concrete pump through the transporting pipe fixed on the boom segments. Concrete slurry is pumped to the boom distal end 20 through the transporting pipe on the boom 9 by the concrete pump, and is sprayed from the terminal hose 17 to the predetermined concrete pouring position.

At present, the boom system 8 of the concrete pump truck may be controlled in the following two modes.

In a manual control mode, the position of the boom distal end 20 is eventually controlled by the operator manually controlling the rotating angle of the hydraulic motor and the telescopic amount of the hydraulic cylinders so as to control the movement of the rotating platform 11 and each of the boom segments, Since the boom system 8 is a mechanism with multiple redundancies, the operator needs to respectively control the movement of the rotating platform and each of the boom segments, and thus the boom distal end 20 cannot reach the predetermined concrete pouring position in a single operation. Thus, there are disadvantages such as a low efficiency and difficulty in operation in the manual control mode.

In an intelligent control manner, according to the relationship between the predetermined concrete pouring position and the current position of the boom distal end 20, the angle of the hydraulic motor to be rotated and the amount of the hydraulic cylinders to be telescoped are obtained in an intelligent manner. That is, the hydraulic motor and the hydraulic cylinders are cooperatively actuated in accordance with a predetermined strategy under the control of a computer, such that the boom distal end 20 reaches the predetermined concrete pouring position.

Currently, both Putzmeister Co. in German and Sany Heavy Industry Co. in China develop the intelligent control system for the boom. When the boom system 8 is controlled by the intelligent control system, a remote-operated controller is used to send control instructions, and an angle measuring unit is used to measure angles between the boom segments and the rotating angle of the rotating platform; and the position information of the boom distal end 20 may be calculated from the above angle measuring values, and according to the obtained position information of the boom distal end 20 and the control instructions sent by the remote-operated controller, a control unit adjusts the actuation of the hydraulic motor and the hydraulic cylinders so that the boom distal end 20 is moved in a preset base coordinate system according to control instructions (for details, please refer to patent documents CN1975070 and DE-A-4306127).

The above intelligent control system for the boom solves the difficulty in great work intensity of the manual control. However, in concrete pouring work, it is necessary to meet the requirement of the concrete pouring work and avoid obstructions in the construction site due to the extremely complex construction site situations. Many practical work process shows that it is difficult to achieve the precise cooperative actuation of parts of the boom system 8 by the intelligent control system, so that it is difficult to keep the concrete outlet of the hose 17 in consistent with the predetermined concrete pouring position.

In view of the problem, a patent document US5823218 discloses an improved solution, in which the operator controls the hose 17 so as to control the position of the concrete outlet of the lower end of the hose 17; and at the same time, boom system 8 is moved according to the varying position of the concrete outlet, that is, the boom system 8 is eventually moved under the guiding of the operator, so that the concrete outlet of the hose 17 is kept to correspond to the predetermined concrete pouring position.

In order that the boom system 8 may be actuated according to the change of the position of the concrete outlet, it is necessary to determine the movement guiding information of the boom in real time. For this purpose, published patent documents US5823218 and WO2008110397 disclose the technical solutions to determine the movement guiding information of the boom by inclination sensors or double-axial inclination sensors, respectively.

Document US 6,202,013 B1 relates to a monitoring system for monitoring stability of an articulated boom and pipeline concrete placing system, the monitoring system comprising a boom position sensor, including a global positioning system (GPS) receiver mounted at the leading end of the boom, for providing boom position information from which a horizontal and vertical location of the leading end of the articulated boom can be determined.

The patent application US 2009/0190441 A1 provides a Position on One Device (POD) for locating and tracking objects and an autonomous ultrasound indoor track system (AUTIS) and a method for locating objects by using the POD.

The patent application US 2009/0295639 A1 describes an autonomous ultrasonic indoor location system including a beacon receiving apparatus.

SUMMARY OF THE INVENTION

The object of the present invention is to provide a device and a method for detecting position of the concrete pump truck, which may detect the position of the concrete outlet in real time so as to facilitate to control a boom system. The device and the method are different from technical solutions disclosed in prior art.

Based on the above device for detecting position of the concrete pump truck, a concrete pump truck including the above device for detecting position of the concrete pump truck is also provided.

The device for detecting position of the concrete pump truck according to the present invention includes a processor, a time counter, a dynamic sensor and at least two fixed-point sensors. A distance between each fixed-point sensor and the dynamic sensor is less than a predetermined value, and there is a predetermined position relationship between the dynamic sensor and a concrete outlet of a hose of the concrete pump truck. The fixed-point sensors are fixed to predetermined detecting base points respectively, and the detecting base points have different coordinate parameters in one reference coordinate system. One kind of sensor of the dynamic sensor and the fixed-point sensors at lease has one of an ultrasonic wave transmitter and an ultrasonic wave receiver, and the other kind of sensor has the other one of the ultrasonic wave receiver and the ultrasonic wave transmitter. The ultrasonic wave receiver in one kind of sensor is configured to receive an ultrasonic wave sent by the ultrasonic wave transmitter in the other kind of sensor. The time counter is configured to obtain a transmission time of the ultrasonic wave in a predetermined path, which is determined according to a position relationship between the dynamic sensor and each fixed-point sensor, according to a moment when the ultrasonic wave transmitter sends the ultrasonic wave and a moment when the ultrasonic wave receiver receives the ultrasonic wave. The processor is configured to respectively obtain distances between the detecting base points and the dynamic sensor according to a preset transmission velocity of the ultrasonic wave and the transmission time obtained by the time counter, and to obtain real-time coordinate parameters of the concrete outlet in the reference coordinate system according to the obtained distances and the coordinate parameters of the detecting base points.

Optionally, the dynamic sensor has a first ultrasonic wave transmitter, and each fixed-point sensor has a first ultrasonic wave receiver. The first ultrasonic wave transmitter is triggered under a triggering command of the processor to send the ultrasonic wave. Each of the first ultrasonic wave receivers outputs a received instruction to the time counter after receiving the ultrasonic wave sent by the first ultrasonic wave transmitter. The time counter obtains the transmission time of the ultrasonic wave going between the dynamic sensor and each fixed-point sensor according to the triggering command and the received instruction of the processor.

Preferably, each of the fixed-point sensors has a first ultrasonic wave transmitter, and the dynamic sensor has a first ultrasonic wave receiver. Each of the first ultrasonic wave transmitters is triggered under a triggering command of the processor to send the ultrasonic wave with a predetermined frequency. The frequencies of the ultrasonic waves sent by the first ultrasonic wave transmitters of the fixed-point sensors are different from each other. The first ultrasonic wave receiver outputs a predetermined received instruction to the time counter after receiving the ultrasonic wave with the predetermined frequency sent by each first ultrasonic wave transmitter, The time counter obtains the transmission time of the ultrasonic wave going between each fixed-point sensor and the dynamic sensor according to the triggering command and the predetermined received instruction of the processor.

Optionally, each of the fixed-point sensor has a first ultrasonic wave transmitter and a second ultrasonic wave receiver. The dynamic sensor has a first ultrasonic wave receiver and at least two second ultrasonic wave transmitters respectively corresponding to the fixed-point sensors. Each of the first ultrasonic wave transmitters is triggered under a triggering command of the processor to send an initial ultrasonic wave with a predetermined frequency. The frequencies of the initial ultrasonic waves sent by the first ultrasonic wave transmitters of the fixed-point sensors are different from each other. Each of the second ultrasonic wave receivers outputs a predetermined received instruction to the time counter after receiving a feedback ultrasonic wave with a predetermined frequency. The first ultrasonic wave receiver sends a triggering signal to one predetermined second ultrasonic wave transmitter according to a predetermined strategy after receiving the initial ultrasonic wave with the predetermined frequency sent by each of the first ultrasonic wave transmitters, so as to allow the second ultrasonic wave transmitter to send the feedback ultrasonic wave with the predetermined frequency, and the frequencies of the feedback ultrasonic waves sent by the second ultrasonic wave transmitters are different from each other. The time counter obtains the transmission time of the ultrasonic wave going from each fixed-point sensor to the dynamic sensor and then returning to the fixed-point sensor according to the triggering command and the predetermined received instruction of the processor.

Preferably, the dynamic sensor has a first ultrasonic wave transmitter and a second ultrasonic wave receiver. Each of the fixed-point sensors has a first ultrasonic wave receiver and a second ultrasonic wave transmitter. The first ultrasonic wave transmitter is triggered under a triggering command of the processor to send an initial ultrasonic wave; and the second ultrasonic wave receiver is configured to output a predetermined received instruction after receiving a feedback ultrasonic wave with a predetermined frequency sent by each of the second ultrasonic wave transmitters. The first ultrasonic wave receiver of each fixed-point sensor is configured to send a triggering signal to the second ultrasonic wave transmitter of this fixed-point sensor after receiving the initial ultrasonic wave sent by the first ultrasonic wave transmitter, so as to allow the second ultrasonic wave transmitter to send the feedback ultrasonic wave with the predetermined frequency, and frequencies of the feedback ultrasonic waves sent by the second ultrasonic wave transmitters of the fixed-point sensors are different from each other. The time counter obtains the transmission time of the ultrasonic wave going from the dynamic sensor to each fixed-point sensor and then returning to the dynamic sensor according to the triggering command and the predetermined received instruction of the processor.

Preferably, the device for detecting position of the concrete pump truck further includes a storage unit and a designated unit. The storage unit stores designated coordinate parameters of the dynamic sensor in the reference coordinate system when the concrete pump truck is in a predetermined state. The designated unit obtains the preset transmission velocity of the ultrasonic wave according to the obtained transmission time of the ultrasonic wave in the predetermined path and the predetermined strategy.

Preferably, the device for detecting position of the concrete pump truck further includes a designated triggering unit for triggering the designated unit in a predetermined time.

Preferably, the processor also obtains a real-time movement direction and/or a real-time movement velocity of the concrete outlet in the reference coordinate system according to the obtained real-time coordinate parameters and the preset initial coordinate parameters of the concrete outlet in the reference coordinate system.

The detecting base points are located on a distal segment boom of the boom.

The dynamic sensor is fixed to the hose of the concrete pump truck.

The concrete pump truck according to the present invention includes a base, a rotating platform and a boom. The rotating platform is mounted on the base by a swiveling mechanism. The boom includes a hose and a plurality of boom segments which are hinged in sequence. A basic boom of the boom is connected with the rotating platform. The hose is connected to a boom distal end of the boom. The concrete pump truck further includes an intelligent control system for controlling position of the boom distal end in a predetermined basic coordinate system. The concrete pump truck further includes anyone of the above-described devices for detecting position of the concrete pump truck. The intelligent control system controls the position of the boom distal end according to information obtained by the processor.

The position detecting method for the concrete pump truck according to the present invention includes the steps of

S110, obtaining a transmission time of an ultrasonic wave in a predetermined path which is determined according to a position relationship between a dynamic reference point and at least two predetermined detecting base points, there is a predetermined position relationship between the dynamic reference point and the concrete outlet, a distance between each detecting base point and the dynamic reference point is less than a predetermined value, and the detecting base points have different coordinate parameters in one reference coordinate system;

S120, respectively obtaining distances between the detecting base points and the dynamic reference point according to a preset transmission velocity of the ultrasonic wave and the transmission time of the ultrasonic wave in the predetermined path; and

S130, obtaining real-time coordinate parameters of the concrete outlet in the reference coordinate system according to the obtained distances and the coordinate parameters of the detecting base point.

Optionally, step S110 includes the steps of

S111, a first ultrasonic wave transmitter located at the dynamic reference point sending the ultrasonic wave;

S112, a first ultrasonic wave receiver located at each detecting base point receiving the ultrasonic wave sent by the first ultrasonic wave transmitter; and

S113, obtaining the transmission time of the ultrasonic wave going between the dynamic reference point and each detecting base point according to a moment when the first ultrasonic wave transmitter sends the ultrasonic wave and a moment when corresponding first ultrasonic wave receiver receives the ultrasonic wave.

Preferably, step S110 includes the steps of

S111, a first ultrasonic wave transmitter located at each detecting base point sending the ultrasonic wave with a predetermined frequency, wherein frequencies of the ultrasonic waves sent by the first ultrasonic wave transmitters of the detecting base points are different from each other;

**S112, a** first ultrasonic wave receiver located at the dynamic reference point receiving the ultrasonic wave with the predetermined frequency sent by each first ultrasonic wave transmitter; and;

S113, obtaining the transmission time of the ultrasonic wave going between each detecting base point and the dynamic reference point according to a moment when corresponding first ultrasonic wave transmitter sends the ultrasonic wave with the predetermined frequency and a moment when the first ultrasonic wave receiver receives the ultrasonic wave with the predetermined frequency.

Optionally, step S110 includes the steps of

S111, a first ultrasonic wave transmitter located at each detecting base point sending an initial ultrasonic wave with a predetermined frequency, wherein frequencies of the initial ultrasonic waves sent by the first ultrasonic wave transmitters of the detecting base points are different from each other;

S112, a first ultrasonic wave receiver located at the dynamic reference point receiving the initial ultrasonic wave with the predetermined frequency sent by each first ultrasonic wave transmitter, and after the initial ultrasonic wave with the predetermined frequency is received, a predetermined second ultrasonic wave transmitter on the dynamic reference point sending a feedback ultrasonic wave with a predetermined frequency; wherein the dynamic reference point has at least two second ultrasonic wave transmitters respectively corresponding to the detecting base points, and frequencies of the feedback ultrasonic waves sent by the second ultrasonic wave transmitters are different from each other;

S113, a second ultrasonic wave receiver of each detecting base point receiving the feedback ultrasonic wave with the predetermined frequency sent by each second ultrasonic wave transmitter; and

S114, obtaining the transmission time of the ultrasonic wave going from each detecting base point to the dynamic reference point and then returning to the detecting base point according to a moment when each first ultrasonic wave transmitter sends the initial ultrasonic wave with the predetermined frequency and a moment when each second ultrasonic wave receiver receives the feedback ultrasonic wave with the predetermined frequency.

Preferably, step S110 includes the steps of

S111, a first ultrasonic wave transmitter of the dynamic reference point sending an initial ultrasonic wave;

S112, a first ultrasonic wave receiver of each detecting base point receiving the initial ultrasonic wave sent by the first ultrasonic wave transmitter, and after the initial ultrasonic wave is received, a second ultrasonic wave transmitter of each detecting base point sending a feedback ultrasonic wave with a predetermined frequency; wherein frequencies of the feedback ultrasonic waves sent by the second ultrasonic wave transmitters of the detecting base points are different from each other;

S113, a second ultrasonic wave receiver of the dynamic reference point receiving the feedback ultrasonic wave with the predetermined frequency sent by each second ultrasonic wave transmitter;

S114, obtaining the transmission time of the ultrasonic wave going from the dynamic reference point to each detecting base point and then returning to the dynamic reference point according to a moment when the first ultrasonic wave transmitter sends the initial ultrasonic wave and a moment when the second ultrasonic wave receiver receives the feedback ultrasonic wave with the predetermined frequency.

Preferably, before step S110, the position detecting method further includes the step of

S100, allowing the concrete pump truck to be in a predetermined state, in which the dynamic reference point has predetermined designated coordinate parameters in the reference coordinate system;

After step S110, the position detecting method includes the step of

S120a, obtaining a preset transmission velocity of the ultrasonic wave according to the obtained transmission time of the ultrasonic wave in the predetermined path and the designated coordinate parameters; then allowing the concrete pump truck to be in a operation state, and the method returning to step S110.

Preferably, before step S110, the position detecting method further includes the step of

S109, determining initial coordinate parameters of the concrete outlet in the reference coordinate system;

After step S130, the position detecting method further includes the step of

S140, obtaining a real-time movement direction and a real-time movement velocity of the concrete outlet in the reference coordinate system according to the obtained real-time coordinate parameters and the initial coordinate parameters of the concrete outlet in the reference coordinate system.

Preferably, after step S140, the position detecting method further includes the step of

S150, allowing the initial coordinate parameters to be the same as the real-time coordinate parameters, and the method returning to step S110.

The device for detecting position of the concrete pump truck according to the present invention includes a processor, a time counter, a dynamic sensor and at least two fixed-point sensors. The processor and the time counter constitute a central processing unit. There is the predetermined position relationship between the dynamic sensor and the concrete outlet. The fixed-point sensors are fixed to the predetermined detecting base points. The position relationship between the dynamic sensor and the detecting base points may be determined from the transmission time of the ultrasonic wave in the predetermined path. Since the positions of the detecting base points are predetermined, the processor may determine the parameters of the dynamic sensor in the reference coordinate system according to the parameters of the detecting base points in the reference coordinate system, so as to further obtain real-time coordinate parameters of the concrete outlet in the reference coordinate system, which provides a basis for controlling the movement of the boom system.

The above predetermined path may have many options. In an optional technical solution, the transmission path between each fixed-point sensor and the dynamic sensor may serve as the predetermined path. The first ultrasonic wave transmitters of the fixed-point sensors send the ultrasonic waves with different frequencies under the triggering command of the processor, and the first ultrasonic wave receiver of the dynamic sensor generates different predetermined received instructions according to the ultrasonic waves with the different frequencies. Further, the time counter obtains the transmission time of the ultrasonic wave going between each fixed-point sensor and the dynamic sensor according to the triggering command and the predetermined received instruction of the processor. In the technical solution, it is required to produce three ultrasonic waves with different frequencies, and it is also required that the dynamic sensor and the fixed-point sensors are connected with the central processing unit, respectively.

Preferably, the transmission path of the ultrasonic wave going from the dynamic sensor to each fixed-point sensor may serve as the predetermined path. At this moment, the first ultrasonic wave transmitter of the dynamic sensor may send the ultrasonic wave with the predetermined frequency under the triggering command of the processor. The first ultrasonic wave receivers of the fixed-point sensors respectively generate the received instruction after receiving the ultrasonic wave sent by the first ultrasonic wave transmitter. The time counter obtains the transmission times of the ultrasonic waves going between the dynamic sensor and the fixed-point sensors according to the triggering command and the received instructions of the processor. In the technical solution, the device for detecting position of the concrete pump truck is only required to generate one ultrasonic wave.

In a further optional technical solution, the transmission path of the ultrasonic wave going from each fixed-point sensor to the dynamic sensor and then returning to the fixed-point sensor may serve as the predetermined path. The first ultrasonic wave transmitter of each fixed-point sensor is triggered under the triggering command of the processor to send the initial ultrasonic wave with the predetermined frequency. The frequencies of the initial ultrasonic waves sent by the first ultrasonic wave transmitters of the fixed-point sensors are different from each other, so as to distinguish the ultrasonic waves sent by the first ultrasonic wave transmitters of different fixed-point sensors. The first ultrasonic wave receiver of the dynamic sensor sends the triggering signal to one second ultrasonic wave transmitter according to the predetermined strategy after receiving the initial ultrasonic wave with the predetermined frequency sent by each of the first ultrasonic wave transmitter, so as to allow the second ultrasonic wave transmitter to send the feedback ultrasonic wave with the predetermined frequency. The frequencies of the feedback ultrasonic waves sent by the second ultrasonic wave transmitters are different from each other, so as to distinguish the initial ultrasonic waves corresponding to the feedback ultrasonic waves. The second ultrasonic wave receiver of each fixed-point sensor outputs the predetermined received instruction to the time counter after receiving the feedback ultrasonic wave with the predetermined frequency. The time counter obtains the transmission time of the ultrasonic wave going from each fixed-point sensor to the dynamic sensor and then returning to the fixed-point sensor according to the triggering command and the predetermined received instruction of the processor. In the technical solution, the central processing unit is only required to be respectively connected with the fixed-point sensors without communicating with the dynamic sensor, but it is necessary to generate six ultrasonic waves with different frequencies,

In a preferable technical solution, the transmission path of the ultrasonic wave going from the dynamic sensor to each fixed-point sensor and then returning to the dynamic sensor may serve as the predetermined path, The first ultrasonic wave transmitter of the dynamic sensor may be triggered under the triggering command of the processor to send an initial ultrasonic wave with the predetermined frequency. The first ultrasonic wave receiver of each fixed-point sensor sends the triggering signal to the second ultrasonic wave transmitter of this fixed-point sensor after receiving the initial ultrasonic wave sent by the first ultrasonic wave transmitter, so as to allow the second ultrasonic wave transmitter to send the feedback ultrasonic wave with the predetermined frequency. The frequencies of the feedback ultrasonic waves sent by the second ultrasonic wave transmitters of the fixed-point sensors are different from each other, so as to distinguish the ultrasonic waves sent by the second ultrasonic wave transmitters of different fixed-point sensors. The second ultrasonic wave receiver of the dynamic sensor outputs the predetermined received instruction according to the frequency of the received feedback ultrasonic wave after receiving the feedback ultrasonic wave with the predetermined frequency sent by each of the second ultrasonic wave transmitters. The time counter obtains the transmission time of the ultrasonic wave going from the dynamic sensor to each fixed-point sensor and then returning to the dynamic sensor according to the triggering command and the predetermined received instruction of the processor. In the technical solution, the second ultrasonic wave transmitters of the fixed-point sensors may be triggered by a simple hardware circuit. The central processing unit is only required to be connected with the dynamic sensor, without being connected with the fixed-point sensors, and the fixed-point sensors are not required to have the data storage ability. In addition, in the technical solution, the processor, the time counter and the dynamic sensor may be easily incorporated into one piece, which provides convenience for the integral design and the optimization of the device for detecting position of the concrete pump truck.

In a further technical solution, the device for detecting position of the concrete pump truck further includes a storage unit and a designated unit. The storage unit stores designated coordinate parameters of the dynamic sensor in the reference coordinate system when the concrete pump truck is in a predetermined state. At this moment, there is a predetermined designated distance between the dynamic sensor and each fixed-point sensor. The designated coordinate parameters may be the coordinate parameters of the dynamic sensor in the reference coordinate system when the hose of the boom system is in a vertical condition. The designated unit may obtain the preset transmission velocity of the ultrasonic wave according to the obtained transmission time of the ultrasonic wave in the predetermined path and the designated coordinate parameters of the dynamic sensor. This technical solution can obtain the transmission velocity of the ultrasonic wave in real time according to actual conditions, so as to keep a relatively small error between the actual transmission velocity of the ultrasonic wave and the preset transmission velocity of the ultrasonic wave, which may more precisely determine the position of the concrete outlet.

In a further technical solution, the device for detecting position of the concrete pump truck further includes a designated triggering unit for triggering the designated unit in a predetermined time. Thus, the device for detecting position of the concrete pump truck may trigger the designated unit in a predetermined manner, so as to adjust the preset transmission velocity of the ultrasonic wave at any time with the change of the operation environment.

In a further technical solution, the processor also can obtain a real-time movement direction and a real-time movement velocity of the concrete outlet in the reference coordinate system according to the obtained real-time coordinate parameters and the preset initial coordinate parameters of the concrete outlet in the reference coordinate system. Thus, The device for detecting position of the concrete pump truck according to the technical solution also may provide more information of the concrete outlet to the intelligent control system of the concrete pump truck, so that the intelligent control system may make the boom system perform the predetermined movement according to the position information of the concrete outlet, which may improve the accuracy and reliability of the intelligent control system controlling the boom system.

The detecting base points are located on the distal segment boom of the boom, which may reduce the distances between the dynamic sensor and the fixed-point sensors so as to ensure the receiving reliability of the ultrasonic wave receiver.

The dynamic sensor is fixed to the hose of the concrete pump truck, which may more conveniently determine the position relationship between the concrete outlet and the dynamic sensor, so as to more conveniently determine the position information of the concrete outlet by the dynamic sensor.

Based on the above-described device for detecting position of the concrete pump truck, the position detecting method for the concrete pump truck according to the present invention also has the corresponding technical effects. Similarly, the concrete pump truck including the device for detecting position of the concrete pump truck also has the corresponding technical effects.

BRIEF DESCRIPTION OF THE DRAWINGS

Fig. 1 is an overall structural view of a concrete pump truck;

Fig. 2 is an overall flowchart of a position detecting method for the concrete pump truck according to a first example of the present invention;

Fig. 3 is a view illustrating the principle of the position detecting method for the concrete pump truck, in which shows the position relationship among a dynamic reference point D, detecting base points A, B and C and a concrete outlet E;

Fig. 4 is a flowchart of a position detecting method for the concrete pump truck according to a first embodiment;

Fig. 5 is a flowchart of a position detecting method for the concrete pump truck according to a second embodiment;

Fig. 6 is a flowchart of a position detecting method for the concrete pump truck according to a third embodiment;

Fig. 7 is a flowchart of a position detecting method for the concrete pump truck according to a fourth embodiment;

Fig. 8 is an overall flowchart of a position detecting method for the concrete pump truck according to a second example of the present invention;

Fig. 9 is an overall flowchart of a position detecting method for the concrete pump truck according to a third example of the present invention;

Fig. 10 is a structural block diagram of a first example of the device for detecting position of the concrete pump truck according to the present invention;

Fig. 11 is a schematic view showing the installation position of a dynamic sensor;

Fig. 12 is a structural block diagram of a second example of the device for detecting position of the concrete pump truck according to the present invention;

Fig. 13 is a structural block diagram of a third example of the device for detecting position of the concrete pump truck according to the present invention;

Fig. 14 is a structural block diagram of a fourth example of the device for detecting position of the concrete pump truck according to the present invention; and

Fig. 15 is a structural block diagram of a fifth example of the device for detecting position of the concrete pump truck according to the present invention.

DETAILED DESCRIPTION

Hereinafter, the present invention will be described in detail with reference to the drawings. The description herein merely is illustrative and explanatory, and should not limit the protection scope of the present invention. For readily understanding, the position detecting method for the concrete pump truck according to the present invention will firstly be described herein, and the device for detecting position of the concrete pump truck according to the present invention will then be described.

Method Section

Referring to Fig. 2, an overall flowchart of a position detecting method for the concrete pump truck according to a first example of the present invention is shown, and the method mainly includes the following steps.
In S110, a transmission time of ultrasonic wave in a predetermined path is obtained.

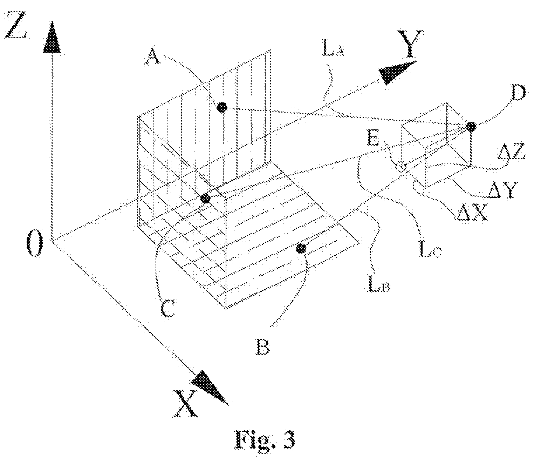

Referring to Fig. 3, Fig. 3 is a view illustrating the principle of the position detecting method for the concrete pump truck, in which shows the position relationship among a dynamic reference point D, detecting base points A, B and C and a concrete outlet E. In Fig. 3, a reference coordinate system O is a three-dimensional Cartesian coordinate system, and thus three detecting base points are provided, so as to obtain the three-dimensional coordinate parameters of the concrete outlet E in the reference coordinate system. In a case that the position of the concrete outlet E is only varied within a two-dimensional coordinate system, two detecting base points with predetermined coordinate parameters may be provided, so as to obtain two-dimensional coordinate parameters of the concrete outlet E in the reference coordinate system, by which the object of the present invention may also be achieved.

There is a predetermined position relationship between the dynamic reference point D and the concrete outlet E. The dynamic reference point D may be fixed with the concrete outlet E, or may be fixed relative to the concrete outlet, or may also be carried by the operator. In the present invention, the dynamic reference point D is fixed with the hose 17 of the concrete pump. Provided that in the reference coordinate system O, the coordinate parameters of the dynamic reference point D are $(X_D, Y_D, Z_D)$, and the coordinate parameters of the concrete outlet E are $(X_E, Y_E, Z_E)$, differences in the coordinate axes of the reference coordinate system O between them are $\Delta X$, $\Delta Y$ and $\Delta Z$, respectively. Thus, in the case of obtaining the coordinate parameters of the dynamic reference point D, from formula (1):

$$X_E = X_D - \Delta X;$$

$$Y_E = Y_D - \Delta Y;$$

$$Z_E = Z_D - \Delta Z;$$

the coordinate parameters of the concrete outlet E are obtained. If $\Delta X$, $\Delta Y$ and $\Delta Z$ are zero respectively, the dynamic reference point D and the concrete outlet E are superposed.

In order to determine the position of the dynamic reference point D, i.e., the coordinate parameters in the reference coordinate system O, it is necessary to predetermine the positions of the detecting base points A, B and C, so that the detecting base points A, B and C have predetermined coordinate parameters in the reference coordinate system, As shown in the figure, the coordinate parameters of the detecting base points A, B and C in the reference coordinate system O respectively are $(X_A, Y_A, Z_A)$, $(X_B, Y_B, Z_B)$ and $(X_C, Y_C, Z_C)$, and the coordinate parameters of these three detecting base points are different from each other, so that these three detecting base points are not superposed with each other,

In transmission of ultrasonic wave, there would be relevant energy loss. In order to reduce errors resulting from energy loss, it is possible to keep the distance between the dynamic reference point D and each of the detecting base points to be less than the predetermined value. Though the dynamic reference point D is dynamic and movable during operation, the movable distance thereof is limited, and especially in the case of fixing with the hose 17, the movable distance thereof is limited by the hose 17. Therefore, the distance between the dynamic reference point D and each of the detecting base points is controlled to be not larger than the predetermined value in an appropriate manner, and the predetermined value is preferably 6.2 meters. Also, in order to reduce the effect of obstructions between the dynamic reference point D and the detecting base points A, B and C on the transmission of ultrasonic wave, there should be no obstruction or no obstruction influencing the transmission of ultrasonic wave between the dynamic reference point D and each detecting base point. The detecting base points A, B and C are provided on the distal segment boom 16 of the boom 9, and the dynamic reference point D is disposed to face the detecting base points A, B and C.

The predetermined path is determined according to the position relationship between the dynamic reference point D and the predetermined detecting base points A, B and C. The predetermined path has many options. In the example described below, taking a particular path as an example, the specific method to obtain the transmission time of ultrasonic wave in the predetermined path will be described in detail.

In S120, the distances between each of the detecting base points A, B and C and the dynamic reference point D are obtained according to a preset transmission velocity c and the transmission time of ultrasonic wave in the predetermined path.

From the following formula (2):

$$L = c\Delta t$$

where, L is the distance of ultrasonic wave transmitted in the time Δt; c is the transmission velocity of ultrasonic wave; Δt is the transmission time of ultrasonic wave in predetermined path,

The distances $L_A$, $L_B$ and $L_C$ between the detecting base points A, B, C and the dynamic reference point D are then determined according to the position relationship between the dynamic reference point D and the detecting base points A, B, C, respectively.

In S130, the real-time coordinate parameters of the concrete outlet E in the reference coordinate system are obtained according to the obtained distances and the coordinate parameters of the detecting base points A, B and C.

Specifically, by solving the following equation (3):

$$\begin{cases} \left(X_D - X_A\right)^2 + \left(Y_D - Y_A\right)^2 + \left(Z_D - Z_A\right)^2 = L_A{}^2 \\ \left(X_D - X_B\right)^2 + \left(Y_D - Y_B\right)^2 + \left(Z_D - Z_B\right)^2 = L_B{}^2 \\ \left(X_D - X_C\right)^2 + \left(Y_D - Y_C\right)^2 + \left(Z_D - Z_C\right)^2 = L_C{}^2 \end{cases}$$

the coordinate parameters of the dynamic reference point D are obtained as $(X_D, Y_D, Z_D)$, and then the real-time coordinate parameters of the concrete outlet E in the reference coordinate system O are obtained from formula (1), so as to determine the position of the concrete outlet E in the reference coordinate system O.

Hereinafter, step S110 will be described in detail by way of four embodiments, respectively.

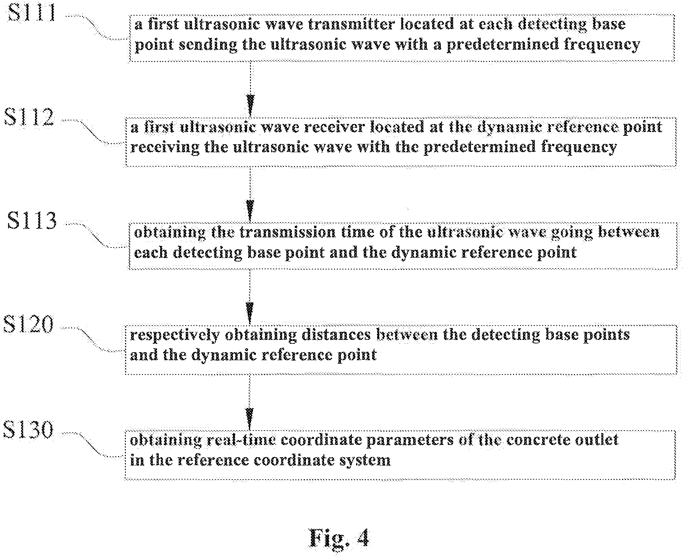

Referring to Fig. 4, a flowchart of a position detecting method for the concrete pump truck according to a first embodiment is shown.

The position detecting method for the concrete pump truck according the embodiment includes the following steps.

In S111, first ultrasonic wave transmitters located at the detecting base points A, B and C send ultrasonic waves having predetermined frequencies, respectively. A preferable technical solution is that the first ultrasonic wave transmitters send ultrasonic waves simultaneously according to triggering commands of an appropriate central processing unit. The moment when the first ultrasonic wave transmitters send ultrasonic waves is designated as To.

In order that the first ultrasonic wave receiver at the dynamic reference point D can identify the ultrasonic waves sent by the first ultrasonic wave transmitters at the detecting base points, the first ultrasonic wave transmitters at the detecting base points send ultrasonic waves with different transmitting frequencies.

In S112, the first ultrasonic wave receiver at the dynamic reference point D receives the ultrasonic waves having the predetermined frequencies sent by the first ultrasonic wave transmitters. The first ultrasonic wave receiver at the dynamic reference point D can receive three ultrasonic wave signals with different frequencies. Since the detecting base points have different coordinate parameters in the reference coordinate system, there are different distances between the detecting base points A, B, C and the dynamic reference point D, and the periods in which the ultrasonic waves sent by the first ultrasonic wave transmitters on the detecting base points reach the dynamic reference point D are different. Thus, the moments when the first ultrasonic wave receiver receives the signals from the first ultrasonic wave transmitters at the detecting base points are different accordingly. Therefore, based on the different frequencies of the ultrasonic waves, the moments when the first ultrasonic wave receiver receives three ultrasonic waves with different frequencies are designated as $T_A$, $T_B$ and $T_C$, respectively $T_A$ refers to the moment when the ultrasonic wave sent by the first ultrasonic wave transmitter of the detecting base point A reaches the first ultrasonic wave receiver, and $T_B$ refers to the moment when the ultrasonic wave sent by the first ultrasonic wave transmitter of the detecting base point B reaches the first ultrasonic wave receiver, and $T_C$ refers to the moment when the ultrasonic wave sent by the first ultrasonic wave transmitter of the detecting base point C reaches the first ultrasonic wave receiver.

In S113, according to the moments when the first ultrasonic wave transmitters send the ultrasonic waves with the predetermined frequencies and the moments when the first ultrasonic wave receiver receives the ultrasonic waves with the predetermined frequencies, the transmission times of the ultrasonic waves going between the detecting base points and the dynamic reference point D are obtained respectively, where:

the transmission time of the ultrasonic wave going from the detecting base point A to the dynamic reference point D: $\Delta t_A = T_A - T_0$;

the transmission time of the ultrasonic wave going from the detecting base point B to the dynamic reference point D: $\Delta t_B = T_B - T_0$; and

the transmission time of the ultrasonic wave going from the detecting base point C to the dynamic reference point

D: $\Delta t_C = T_C - T_0$.

In S120, according to the preset transmission velocity c of the ultrasonic wave and the transmission times $\Delta t_A$, $\Delta t_B$ and $\Delta t_C$ of the ultrasonic waves in the predetermined paths, the distances between each of the detecting base points A, B and C and the dynamic reference point D are obtained respectively, where:

the distance between the detecting base point A and the dynamic reference point D: $L_A = c^*\Delta t_A$;

the distance between the detecting base point B and the dynamic reference point D: $L_B = c^*\Delta t_B$;

the distance between the detecting base point C and the dynamic reference point D: $L_C = c^*\Delta t_C$;

and where, c is the transmission velocity of the ultrasonic wave. Then, according to the above step S130, the real-time coordinate parameters of the concrete outlet E in the reference coordinate system O are obtained.

In order to reduce the mutual interference between the ultrasonic waves, in the second embodiment, another position detecting method for the concrete pump truck is provided, in which only one ultrasonic wave is generated.

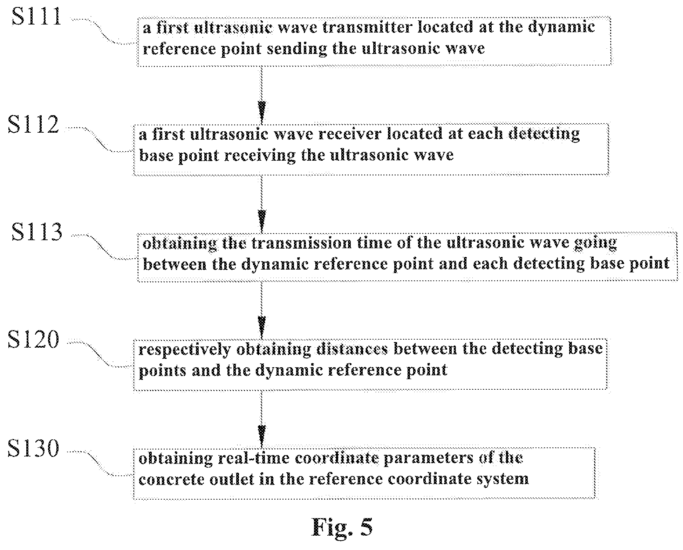

Referring to Fig. 5, a flowchart of a position detecting method for the concrete pump truck according to a second embodiment is shown. The method includes the following steps.

In S111, the first ultrasonic wave transmitter at the dynamic reference point D sends the ultrasonic wave, and the transmission moment is designated as $T_0$;

In S112, the first ultrasonic wave receivers at the detecting base points receive the ultrasonic wave sent by the first ultrasonic wave transmitter. Similarly, since the distances between each of the detecting base points A, B and C and the dynamic reference point D are different from each other, according to the different moments when the ultrasonic wave is received, three moments $T_A$, $T_B$ and $T_C$ when the ultrasonic wave is received are obtained;

In S113, according to the moment when the first ultrasonic wave transmitter sends the ultrasonic wave and the moments when the first ultrasonic wave receiver receives the ultrasonic wave, the transmission times of the ultrasonic waves going between the detecting base points and the dynamic reference point D are obtained, namely, $\Delta t_A$, $\Delta t_B$ and $\Delta t_C$ are obtained, respectively, in a manner same as that in the first embodiment;

In S120, according to the preset transmission velocity c of the ultrasonic wave and the transmission times $\Delta t_A$, $\Delta t_B$ and $\Delta t_C$ of the ultrasonic wave in the predetermined paths, the distances $L_A$, $L_B$ and $L_c$ between the detecting base points A, B, C and the dynamic reference point D are obtained respectively;

Then, according to the above step S130, the real-time coordinate parameters of the concrete outlet E in the reference coordinate system O are obtained.

In the above two embodiments, it is required that corresponding central processing unit is connected with the ultrasonic wave sensor at the dynamic reference point D and the ultrasonic wave sensors at the detecting base points respectively, that the ultrasonic wave sensors at the dynamic reference point D and the detecting base points have corresponding communicating functions, so that the central processing unit can trigger the ultrasonic wave transmitter to send the ultrasonic wave and can perform predetermined processes according to the moments when the ultrasonic wave receiver receives the predetermined ultrasonic wave.

In order to simplify hardware circuit and facilitate the wiring of the system, the present invention also provides the following two embodiments.

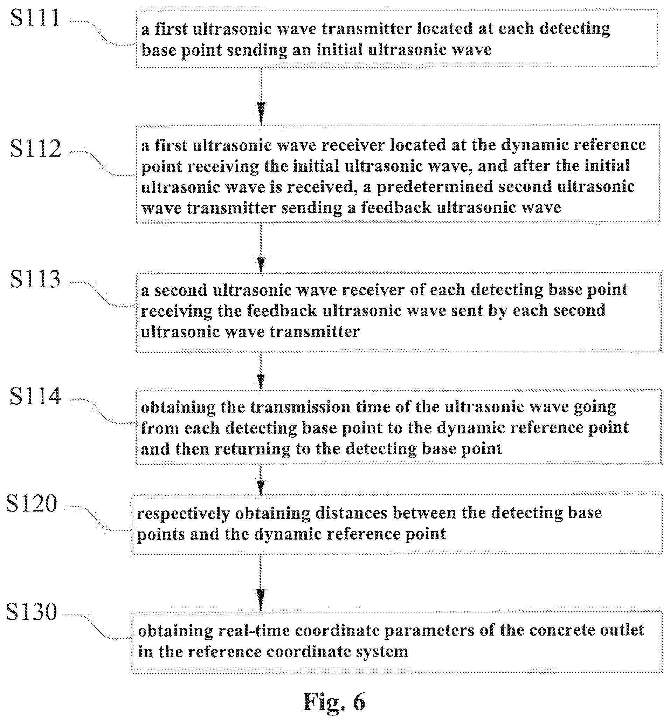

Referring to Fig. 6, a flowchart of a position detecting method for the concrete pump truck according to a third embodiment is shown. The embodiment is mainly different from the above two embodiments in step S110. Thus, step S110 will be described in detail below, Step S110 includes the following steps.

In S111, the first ultrasonic wave transmitters of the detecting base points send initial ultrasonic waves with the predetermined frequencies. Similarly, in order that the first ultrasonic wave receiver of the dynamic reference point D can identify the ultrasonic waves sent by the first ultrasonic wave transmitters of the different detecting base points, the frequencies of the initial ultrasonic waves sent by the first ultrasonic wave transmitters of respective detecting base points are different from each other. Preferably, the first ultrasonic wave transmitters of the detecting base points send initial ultrasonic waves simultaneously, and the transmission moment is designated as $T_0$.

In S112, the first ultrasonic wave receiver of the dynamic reference point D receives the initial ultrasonic waves with predetermined frequencies sent by the first ultrasonic wave transmitters, and after the initial ultrasonic waves with the predetermined frequencies are received, a predetermined second ultrasonic wave transmitter of the dynamic reference point D sends feedback ultrasonic wave with a predetermined frequency. In order that second ultrasonic wave receivers of the detecting base points can determine the initial ultrasonic waves corresponding to the feedback ultrasonic waves according to the frequency, the dynamic reference point D is provided with three second ultrasonic wave transmitters respectively corresponding to the detecting base points A, B and C, and the frequencies of the feedback ultrasonic waves sent by the second ultrasonic wave transmitters are different from each other.

In S113, the second ultrasonic wave receivers of the detecting base points receive the feedback ultrasonic waves with the predetermined frequencies sent by the second ultrasonic wave transmitter. Similarly, since the distances between each of the detecting base points A, B, C and the dynamic reference point D are different from each other, the detecting base points A, B and C respectively receive the feedback ultrasonic waves at three moments, and the three moments are respectively designated as $T_A$, $T_B$ and $T_C$. Different from the first and second embodiments, in this embodiment, $T_A$ refers to the moment when the feedback ultrasonic wave with the predetermined frequency reaches the detecting base point A, and $T_B$ refers to the moment when the feedback ultrasonic wave with the predetermined frequency reaches the detecting base point B, and $T_C$ refers to the moment when the feedback ultrasonic wave with the predetermined frequency reaches the detecting base point C.

In S 114, according to the moment $T_0$ when the first ultrasonic wave transmitters send the ultrasonic wave with the predetermined frequencies and the moments when the second ultrasonic wave receivers of the detecting base points receive the ultrasonic waves with the predetermined frequencies, the transmission times of the ultrasonic waves going from the detecting base points to the dynamic reference point and then returning to the detecting base points; that is, $\Delta t_A$, $\Delta t_B$ and $\Delta t_C$ are respectively obtained. This embodiment is different from the first and second embodiments in that, $\Delta t_A$ is the transmission time of the ultrasonic wave going from the detecting base point A to the dynamic reference point D and then returning to the detecting base point A; $\Delta t_B$ is the transmission time of the ultrasonic wave going from the detecting base point B to the dynamic reference point D and then returning to the detecting base point B, and $\Delta t_C$ is the transmission time of the ultrasonic wave going from the detecting base point C to the dynamic reference point D and then returning to the detecting base point C.

Then, in step S120, according to the preset transmission velocity c of the ultrasonic wave and the transmission times $\Delta l_A$, $\Delta t_B$ and $\Delta t_C$ of the ultrasonic wave in the predetermined paths, the distances between each of the detecting base points A, B and C and the dynamic reference point D are obtained. That is:

the distance between the detecting base point A and the dynamic reference point D: $L_A = c*\Delta t_A/2$;

the distance between the detecting base point B and the dynamic reference point D: $L_B = c*\Delta t_B/2$; and

the distance between the detecting base point C and the dynamic reference point D: $L_C = c*\Delta t_C/2$;

Then, the real-time coordinate parameters of the concrete outlet E in the reference coordinate system O are obtained from the above step S130.

In the third embodiment, it is not necessary to connect the ultrasonic wave sensor of the dynamic reference point D with the corresponding central processing unit. After the ultrasonic wave is received, the feedback ultrasonic wave may be sent with a simple hardware circuit. The corresponding central processing unit only needs to be connected with the detecting base points. Thus, the hardware and wiring of the system may be simplified to a certain extent.

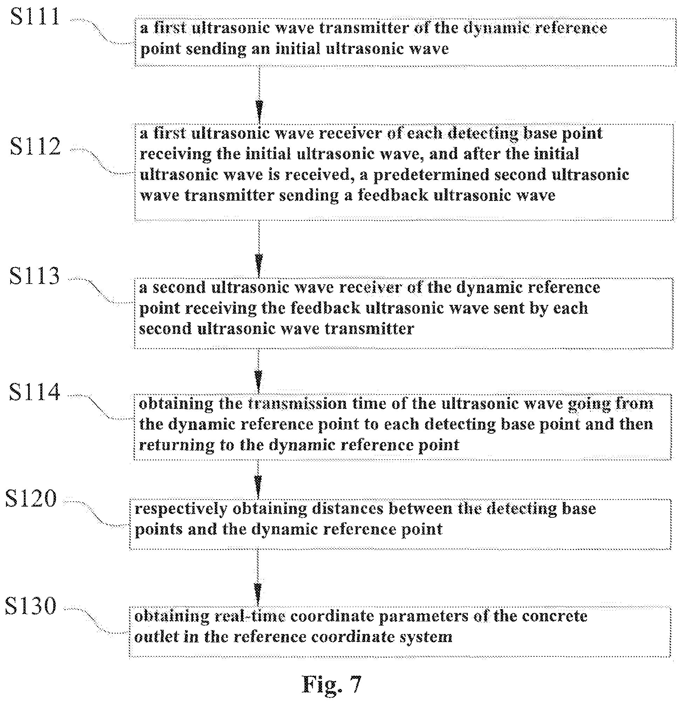

In order to further simplify the wiring of the system, the present invention also provides a fourth embodiment. Referring to Fig. 7, a flowchart of a position detecting method for the concrete pump truck according to a fourth embodiment is shown. The embodiment includes the following steps.

In S111, the first ultrasonic wave transmitter of the dynamic reference point D sends the initial ultrasonic wave. The transmission moment is designated as $T_0$;

In S112, the first ultrasonic wave receivers of the detecting base points receive the initial ultrasonic wave sent by the first ultrasonic wave transmitter, and after the initial ultrasonic wave is received, the second ultrasonic wave transmitters of the detecting base points send the feedback ultrasonic waves with the predetermined frequencies. In order that the second ultrasonic wave receiver of the dynamic reference point D can identify the feedback ultrasonic waves from the different detecting base points, the frequencies of the feedback ultrasonic waves sent by the second ultrasonic wave transmitters at the detecting base points are different from each other;

In S113, the second ultrasonic wave receiver of the dynamic reference point D receives the feedback ultrasonic waves with the predetermined frequencies sent by the second ultrasonic wave transmitters;

In S114, according to the moment To when the first ultrasonic wave transmitter sends the ultrasonic wave with the predetermined frequency and the moments when the second ultrasonic wave receiver receives the feedback ultrasonic waves with the predetermined frequencies, transmission times of the ultrasonic waves going from the dynamic reference point to the detecting base points and then returning to the dynamic reference point are respectively obtained; that is, $\Delta t_A$, $\Delta t_B$ and $\Delta t_C$ are respectively obtained;

Then, steps S120 and S130 are performed as the third embodiment, so as to achieve the object of the present invention.

The transmission velocity c of the ultrasonic wave in air is relevant to the practical working environment, and generally, may be obtained from the formula: $c = c_0(1+T/273)^{1/2}$ (m/s). In the formula, T refers to an absolute temperature, and $c_0 = 331.4$ m/s. In the case that requirement for measuring the velocity is low, c may also be a constant 340 m/s. In the case that it needs a high precision, a temperature sensor may be provided, so as to adjust the preset transmission velocity of the ultrasonic wave according to the temperature changes of the working environment to obtain more precise detecting results. In order to improve the detecting results, the second example of the present invention provides another position detecting method for the concrete pump truck.

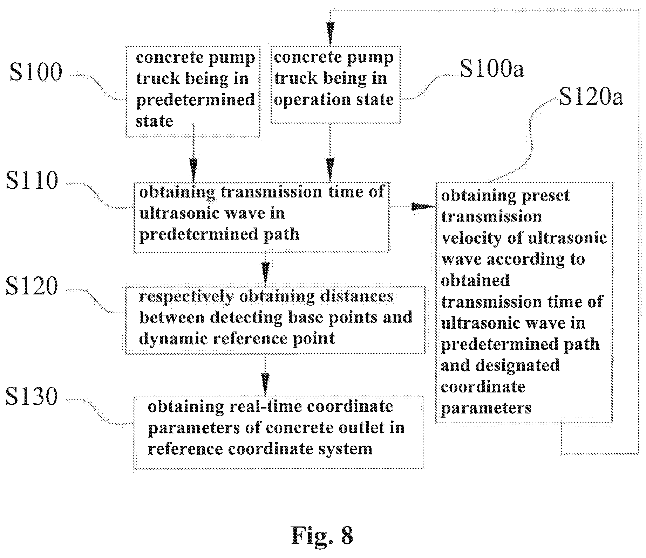

Referring to Fig. 8, an overall flowchart of a position detecting method for the concrete pump truck according to a second example of the present invention is shown. Compared with the overall flowchart of the device of detecting position of the concrete pump truck according to the first example, the second example has the following differences.

Before step S110, the second example further includes the following steps.

In S100, the concrete pump truck is in a predetermined state in which the dynamic reference point D is located in a designated position, and has designated coordinate parameters in the reference coordinate system.

Step S100 may be started or triggered in a manual selection manner, or may be automatically triggered by an appropriate central processing unit when the concrete pump truck is in the predetermined state, or may be triggered according to other strategies. In this case, the designated coordinate parameters of the dynamic reference point D are designated as $(X_0, Y_0, Z_0)$, and the designated position may be a predetermined position, or may be the position where the dynamic reference point D is located when the hose 17 of the concrete pump is in a vertical condition. Since the position of the dynamic reference point D is determined, and the designated coordinate parameters are also determined, the distances between the detecting base points and the dynamic reference point D may also be determined. In this case, the distance between the detecting base point A and the dynamic reference point D may be designated as $L_{A0}$, the distance between the detecting base point B and the dynamic reference point D may be designated as $L_{B0}$, and the distance between the detecting base point C and the dynamic reference point D may be designated as $L_{C0}$.

In step S110, the transmission time of the ultrasonic wave in the predetermined path is obtained, and then the process proceeds to the following step.

In S120a, according to the obtained transmission time of the ultrasonic wave in the predetermined path and the designated coordinate parameters, preset transmission velocity of the ultrasonic wave is obtained.

In step S110, when the transmission times $\Delta t_A$, $\Delta t_B$ and $\Delta t_C$ are obtained according to the above first and second embodiments, the preset transmission velocity is obtained in the following manner:

$$c = (L_{A0}/\Delta t_A + L_{B0}/\Delta t_A + L_{C0}/\Delta t_A)/3;$$

or,

$$c = (\sqrt{(X_0 - X_A)^2 + (Y_0 - Y_A)^2 (Z_0 - Z_A)^2)}/\Delta t_A + \sqrt{(X_0 - X_B)^2 + (Y_0 - Y_B)^2 (Z_0 - Z_B)^2)}/\Delta t_B + \sqrt{(X_0 - X_C)^2 + (Y_0 - Y_C)^2 (Z_0 - Z_C)^2)}/\Delta t_C)/3$$

In step S110, when the transmission times $\Delta t_A$, $\Delta t_B$ and $\Delta t_C$ are obtained according to the above third and fourth embodiments, the preset transmission velocity is obtained in the following manner:

$$c = (L_{A0}/\Delta t_A + L_{B0}/\Delta t_A + L_{C0}/\Delta t_A)2/3$$

or,

$$c = (\sqrt{(X_0 - X_A)^2 + (Y_0 - Y_A)^2 (Z_0 - Z_A)^2)}/\Delta t_A + \sqrt{(X_0 - X_B)^2 + (Y_0 - Y_B)^2 (Z_0 - Z_B)^2)}/\Delta t_B + \sqrt{(X_0 - X_C)^2 + (Y_0 - Y_C)^2 (Z_0 - Z_C)^2)}/\Delta t_C)2/3$$

In order to improve the designated precision, this case is a preferable technical solution, and the transmission velocity of the ultrasonic wave is obtained by mean value, In a specific situation, the transmission velocity of the ultrasonic wave may also be obtained by one detecting base point.

In the above manner, the transmission velocity of the ultrasonic wave conforming to the practical working environment may be obtained, and the resultant transmission velocity is used to detect the position of the concrete outlet as the preset transmission velocity.

In S110a, the concrete pump truck is in an operation state, and the process returns to step S110, and then the concrete outlet E are detected by the method according to the first example.

The concrete pump truck may be switched from the designated state into the operation state manually or automatically by using an appropriate central processing unit according to the predetermined strategies.

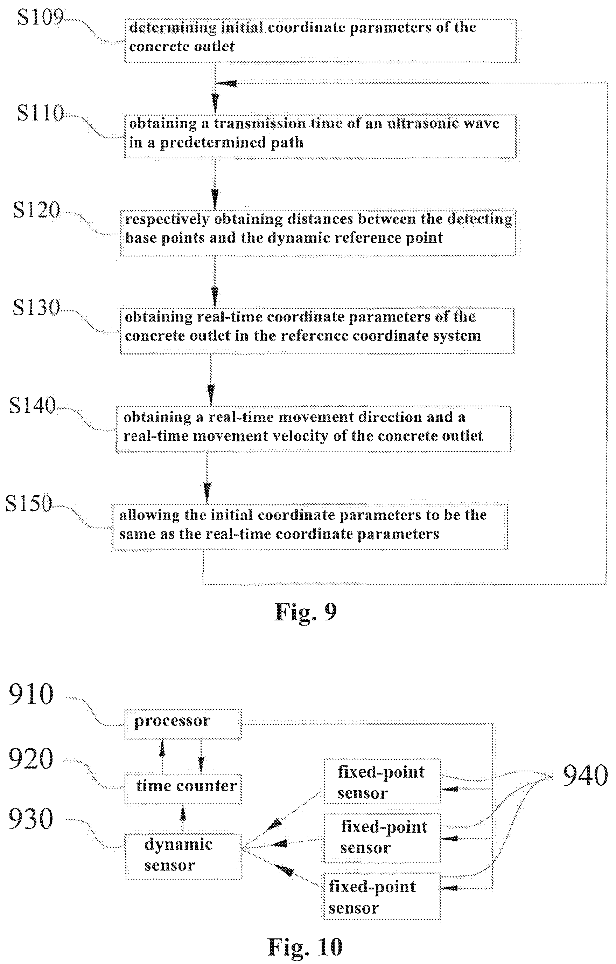

In order to obtain more information related to the concrete outlet E, the third example also provides another position detecting method for the concrete pump truck. Referring to Fig. 9, an overall flowchart of a position detecting method for the concrete pump truck according to a third example of the present invention is shown.

Before step S110, the method further includes the following steps.

In S109, initial coordinate parameters of the concrete outlet E in the reference coordinate system O are determined. The initial coordinate parameters are taken as references for determining the real-time coordinate parameters of the concrete outlet E,

Steps S110, S120 and S130 are then performed. After step S130, the method further includes the following steps.

In S140. according to obtained real-time coordinate parameters and the initial coordinate parameters of the concrete outlet E in the reference coordinate system O, the real-time movement direction and the real-time movement velocity of the concrete outlet E in the reference coordinate system are obtained. By comparing the initial coordinate parameters with the real-time coordinate parameters, the movement direction and the movement velocity of the concrete outlet E in a predetermined cycle may be obtained. By processing of the appropriate central processing unit, the movement distance ds of the concrete outlet in the predetermined cycle dt may be obtained according to the initial coordinate parameters and the real-time coordinate parameters, and the real-time movement velocity of the concrete outlet E then may be obtained from the formula V=ds/dt.

In S150, the initial coordinate parameters are made to be the same as the real-time coordinate parameters, and then the process turns to step S110. By updating the initial coordinate parameters of the concrete outlet E in the real time, the next cycle of processing is performed to obtain information of the concrete outlet E such as the real-time movement direction and the real-time movement velocity.

Device Section:

The position detecting method for the concrete pump truck according to the present invention has been described above. Based on the above-described method, the device for detecting position of the concrete pump truck according to the present invention will be described below. In order to shorten the length of the description, referring to the above-described examples and specific embodiments, the device for detecting position of the concrete pump truck will be described below. It should be noted that, the means for carrying out the above-described method according to the present invention is not limit to the following device for detecting position of the concrete pump truck.

Referring to Fig. 10, a structural block diagram of a first example of the device for detecting position of the concrete pump truck according to the present invention is shown. The device for detecting position of the concrete pump truck may carry out the position detecting method for the concrete pump truck of the first example according to the above first embodiment.

The first example of the device for detecting position of the concrete pump truck according to the present invention includes a processor 910, a time counter 920, a dynamic sensor 930 and three fixed-point sensors 940.

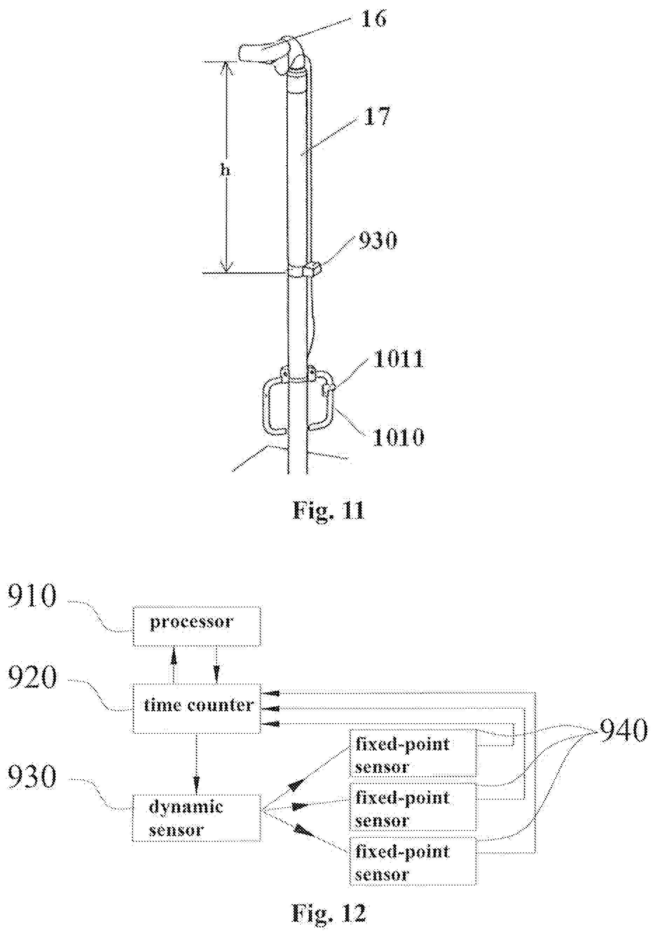

The distances between each of the fixed-point sensors 940 and the dynamic sensor 930 are less than a predetermined value. The dynamic sensor 930 corresponds to the dynamic reference point D in the above method. As shown in Fig. 11, a schematic view showing the installation position of a dynamic sensor is shown. The dynamic sensor 930 is mounted on the hose 17 of the concrete pump. The vertical distance between the dynamic sensor 930 and the boom distal end 20 is h, so as to facilitate positioning of the dynamic sensor 930. Since an operator and the concrete outlet E are always kept within a certain range, the coordinate parameters of the concrete pump outlet E in the reference coordinate system O may also be determined according to the position of the operator. Therefore, the dynamic sensor 930 may also be carried by the operator.

Three fixed-point sensors 940 are respectively fixed to the predetermined detecting base points A, B and C. The detecting base points have different coordinate parameters in the reference coordinate system O,

Each of the three fixed-point sensors 940 has a first ultrasonic wave transmitter, and the dynamic sensor 930 has a first ultrasonic wave receiver. The first ultrasonic wave transmitters can be triggered under the triggering command of the processor 910 to send the ultrasonic wave with the predetermined frequency. The frequencies of the ultrasonic waves sent by the first ultrasonic wave transmitters of the fixed-point sensors 940 are different from each other. The first ultrasonic wave receiver of the dynamic sensor 930 may output the predetermined received instruction to the time counter 920 after receiving the ultrasonic wave with the predetermined frequency sent by each first ultrasonic wave transmitter.

The time counter 920 can obtain the transmission times of the ultrasonic waves going between the fixed-point sensors 940 and the dynamic sensor 930 according to the triggering command and the predetermined received instruction of the processor 910. The processor 910 can respectively obtain the distances between the detecting base points and the dynamic sensor 930 according to the preset transmission velocity of the ultrasonic wave and the transmission times obtained from the time counter 920. The real-time coordinate parameters of the concrete outlet E in the reference coordinate system O are obtained according to the obtained distances and the coordinate parameters of the detecting base point.

The processor 910 may send triggering command to the first ultrasonic wave transmitters of the fixed-point sensors 940 via the time counter 920, or may send associated instructions to the time counter 920 at the same time when sending the triggering command to the first ultrasonic wave transmitters, so that the time counter 920 can determine the moment of sending the ultrasonic wave. The dynamic sensor 930 and the fixed-point sensors 940 may accomplish synchrony of the processing cycle according to the instructions of the processor 910, such that the time counter 920 gets prepared to obtain the transmission times of the ultrasonic waves in the predetermined paths.

For the specific operation process of the device, please refer to the first embodiment of the position detecting method for the concrete pump truck according to the first example in the method section, and thus will not described repeatedly.

Referring to Fig. 12, a structural block diagram of a second example of the device for detecting position of the concrete pump truck according to the present invention is shown. The device for detecting position of the concrete pump truck may carry out the position detecting method for the concrete pump truck of the first example according to the second embodiment in the method section.

The second example of the device for detecting position of the concrete pump truck is different from the first example of the device for detecting position of the concrete pump truck in that the dynamic sensor 930 has a first ultrasonic wave transmitter, and each of the fixed-point sensors 940 has a first ultrasonic wave receiver. The first ultrasonic wave transmitter may be triggered under the triggering command of the processor 910 to send the ultrasonic wave. The first ultrasonic wave receiver of each fixed-point sensor 940 may output received instruction to the time counter 920 after receiving the ultrasonic wave sent by each first ultrasonic wave transmitter. The other details are the same as the first example. In this device for detecting position of the concrete pump truck, the object of the present invention may be achieved by the first ultrasonic wave transmitter of the dynamic sensor 930 sending the ultrasonic wave with the predetermined frequency under the triggering command of the processor 910, without sending a plurality of ultrasonic waves with different frequencies.

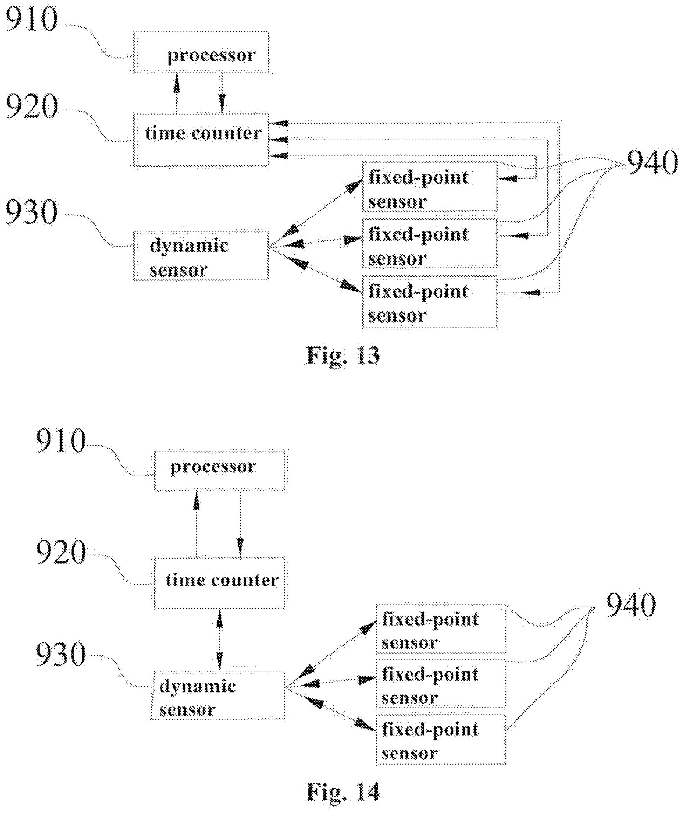

Referring to Fig. 13, a structural block diagram of a third example of the device for detecting position of the concrete pump truck according to the present invention is shown. The device for detecting position of the concrete pump truck may carry out the position detecting method for the concrete pump truck of the first example according to the third embodiment in the method section.

Compared with the above first example of the device for detecting position of the concrete pump truck, in the third example of the device for detecting position of the concrete pump truck, the fixed-point sensors 940 have first ultrasonic wave transmitters and second ultrasonic wave receivers; and the dynamic sensor 930 has a first ultrasonic wave receiver and three second ultrasonic wave transmitters. The three second ultrasonic wave transmitters correspond to the three fixed-point sensors 940, respectively.

The first ultrasonic wave transmitter of each fixed-point sensor 940 may be triggered under the triggering command of the processor 910 to send the initial ultrasonic wave with predetermined frequency. The frequencies of the initial ultrasonic waves respectively sent by the first ultrasonic wave transmitters of the fixed-point sensors 940 are different from each other. The second ultrasonic wave receivers may output predetermined received instruction to the time counter 920 after receiving the feedback ultrasonic waves with the predetermined frequencies.

The first ultrasonic wave receiver of the dynamic sensor 930 may send triggering signal to a predetermined second ultrasonic wave transmitter according to a predetermined strategy after receiving the initial ultrasonic wave with the predetermined frequency sent by each first ultrasonic wave transmitter, and corresponding second ultrasonic wave transmitter may be selected according to the different frequency to send the feedback ultrasonic wave with the predetermined frequency. The frequencies of the feedback ultrasonic waves sent by the second ultrasonic wave transmitters of the dynamic sensor 930 are different from each other.

The time counter 920 may obtain the transmission time of the ultrasonic wave going from the fixed-point sensor 940 to the dynamic sensor 930 and then returning to the fixed-point sensor 940 according to the triggering command and the predetermined received instruction of the processor 910.

The other details are the same as the first example of the device for detecting position of the concrete pump truck, except that since the transmission time obtained by the time counter 920 is a transmission time of the ultrasonic wave going from the fixed-point sensor 940 to the dynamic sensor 930 and then returning to the fixed-point sensor 940, the processor 110 should make adjustment in the processing strategy according to the change of the transmission time, and the specific processing strategy is the same as that of the third embodiment in the first example of the method section, which will not described repeatedly.

In this example, the central processing unit formed of the time counter 920 and the processor 910 is only required to connect with the fixed-point sensors 940 respectively, without connecting with the dynamic sensor 930. Thus, the wiring of the system may be simplified.

Referring to Fig. 14, a structural block diagram of a fourth example of the device for detecting position of the concrete pump truck according to the present invention is shown. The device for detecting position of the concrete pump truck may carry out the position detecting method for the concrete pump truck of the first example according to the fourth embodiment in the method section.

Compared with the third example of the device for detecting position of the concrete pump truck, in the fourth example of the device for detecting position of the concrete pump truck, the dynamic sensor 930 has a first ultrasonic wave transmitter and a second ultrasonic wave receiver; and each fixed-point sensor 940 has a first ultrasonic wave receiver and a second ultrasonic wave transmitter.

The first ultrasonic wave transmitter of the dynamic sensor 930 may be triggered under the triggering command of the processor 910 to send the initial ultrasonic wave; and the second ultrasonic wave receiver may output the predetermined received instruction after receiving the feedback ultrasonic wave with predetermined frequency sent by each second ultrasonic wave transmitter.

The first ultrasonic wave receiver of each fixed-point sensor 940 may send the triggering signal to the second ultrasonic wave transmitter of the fixed-point sensor 940 after receiving the initial ultrasonic wave sent by the first ultrasonic wave transmitter, so that the second ultrasonic wave transmitter sends the feedback ultrasonic wave with the predetermined frequency. Frequencies of the feedback ultrasonic waves sent by the second ultrasonic wave transmitters of the fixed-point sensors 940 are different from each other.

The time counter 920 may obtain the transmission time of the ultrasonic wave going from the dynamic sensor 930 to each fixed-point sensor 940 and then returning to the dynamic sensor 930 according to the triggering command and the predetermined received instruction of the processor 910.

The other details are the same as the third example of the device for detecting position of the concrete pump truck, which will no be described repeatedly.

As can be seen from the figures, in the fourth example of the device for detecting position of the concrete pump truck, the fixed-point sensors 940 are relatively simple, and the second ultrasonic wave transmitter may be triggered with a simple hardware circuit, without communicating with the processor 910, and without having the data storage ability. Therefore, the dynamic sensor 930 may integrally have the data processing function and the communicating function, so as to facilitate the integral design and the optimization of the dynamic sensor 930 to conveniently establish the connection between the device for detecting position of the concrete pump truck and the intelligent control system. In addition, in the third example of the device for detecting position of the concrete pump truck, it is necessary to generate six ultrasonic waves in one detecting cycle, while in the fourth example of the device for detecting position of the concrete pump truck, it is necessary to generate only four ultrasonic waves to achieve the detecting object, which may reduce the interference between the ultrasonic waves and improve the accuracy of the detecting results.

It can be determined from the above description that the object of the present invention may be achieved, as long as one kind of sensor of the dynamic sensor 930 and the fixed-point sensors 940 at least has one of the ultrasonic wave transmitter and the ultrasonic wave receiver, and the other kind of sensor at least has the other one of the ultrasonic wave receiver and the ultrasonic wave transmitter, and the ultrasonic wave receiver in one kind of sensor is used to receive the ultrasonic wave sent by the ultrasonic wave transmitter in the other kind of sensor; and at the same time, the time counter 920 may obtain the transmission time of the ultrasonic wave in the predetermined path, which may be determined by the position relationship between the dynamic sensor and the fixed-point sensors, according to the moment when the ultrasonic wave transmitter sends the ultrasonic wave and the moment when the ultrasonic wave receiver receives the ultrasonic wave.

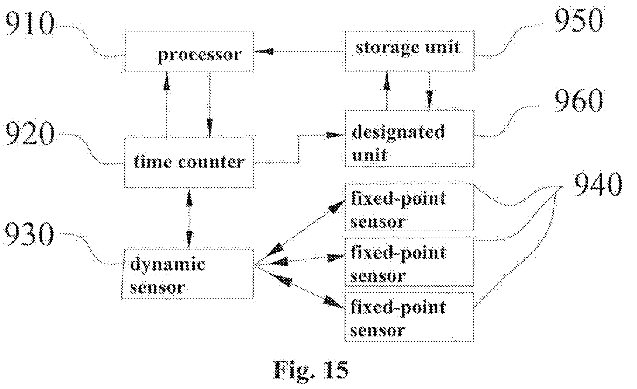

Referring to Fig. 15, a structural block diagram of a fifth example of the device for detecting position of the concrete pump truck according to the present invention is shown. This device for detecting position of the concrete pump truck corresponds to the position detecting method for the concrete pump truck according to the second example in the above method section.

Compared with the fourth example of the device for detecting position of the concrete pump truck, the fifth example of the device for detecting position of the concrete pump truck further includes a storage unit 950 and designated unit 960.

The storage unit 950 stores the designated coordinate parameters of the dynamic sensor 930 in the reference coordinate system O when the concrete pump truck is in the predetermined state. The designated unit 960 obtains the transmission velocity of the ultrasonic wave according to the transmission time of the ultrasonic wave in the predetermined path obtained from the time counter 920 and the predetermined strategy, and stores the obtained transmission velocity of the ultrasonic wave in the storage unit 950 as the preset transmission velocity of the ultrasonic wave, so as to provide a basis on which the processor 910 processes according to the predetermined strategy. For the specific working process of the device, please refer to the position detecting method for the concrete pump truck according to the second example in the method section.

It should be noted that the above storage unit 950 and the above designated unit 960 may be incorporated not only into the above fourth example of the device for detecting position of the concrete pump truck, but also into the other devices for detecting position of the concrete pump truck according to the present invention, so as to determine the transmission velocity of the ultrasonic wave.

In order to conveniently determine the transmission velocity of the ultrasonic wave, the device for detecting position of the concrete pump truck may further include a designated triggering unit for triggering the designated unit 960 in the predetermined time. The designated triggering unit may be an input device, so that the device for detecting position of the concrete pump truck may determine the transmission velocity of the ultrasonic wave according to the input of the input device; or the designated triggering unit may be connected with the processor 910, so as to trigger the designated unit 960 in the predetermined state according to the predetermined strategy to determine the transmission velocity of the ultrasonic wave.

In order that the device for detecting position of the concrete pump truck may produce more information, provide more reference information to the intelligent control system of the boom, and more precisely obtain the guiding information of the movement of the boom, the processor 910 may obtain the real-time movement direction and the real-time movement velocity of the concrete outlet E in the reference coordinate system according to the real-time coordinate parameters and the initial coordinate parameters of the concrete outlet E in the reference coordinate system. The initial coordinate parameters may be stored in the storage unit 950, or may be stored in the processor 910. The initial coordinate parameters may be updated according to the real-time coordinate parameters of the concrete outlet E obtained by the processor 910, so that in the next processing cycle, the updated coordinate parameters serves as the initial coordinate parameters to obtain the real-time movement direction and the real-time movement velocity of the concrete outlet E in the reference coordinate system. For specific processing process, please refer to the position detecting method for the concrete pump truck according to the third example in the method section, which will not be described repeatedly.

Based on the above device for detecting position of the concrete pump truck, the present invention also provides a concrete pump truck including a base 10, a rotating platform 11 and a boom 9. The rotating platform 11 is mounted on the base 10 by a swiveling mechanism. The boom 9 includes the hose 17 and a plurality of boom segments which are hinged in sequence. The base boom 12 of the boom 9 is connected with the rotating platform 11. The hose 17 is connected to the boom distal end 20 of the distal segment boom 16 of the boom 9. The concrete pump truck further includes an intelligent control system for controlling the position of the boom distal end 20 in the basic coordinate system. The intelligent control system may be the intelligent control system described in the Background of the Invention. The concrete pump truck in the present invention is different from that in the prior art in that the concrete pump truck further includes anyone of the above-described devices for detecting position of the concrete pump truck. The intelligent control system obtains the guiding information of movement of the boom according to the information obtained by the processor 910 to control the movement direction and the movement velocity of the boom distal end 20, so that the boom distal end 20 moves with the concrete outlet E, and reaches or is maintained in the predetermined position.

The intelligent control system of the concrete pump truck controls the movement of the boom distal end 20 of the boom system 8 on the basis of the basic coordinate system. Provided that there is a determined relationship between the reference coordinate system O and the basic coordinate system of the device for detecting position of the concrete pump truck, associated information such as the real-time coordinate parameters, movement direction, or movement velocity of the concrete outlet E in the reference coordinate system may be converted into associated information in the basic coordinate system. When the detecting base points are located on the boom 9, the coordinate reference parameters of the detecting base points may be obtained according to the angle between the boom 9 and the rotating platform 11 and the separation angles between the boom segments. Thus, the intelligent control system may determine the movement direction and velocity of the boom distal end 20 according to the associated information of the concrete outlet E in the basic coordinate system, and control the movement path and movement velocity of the boom distal end 20 by controlling the cooperative actions of the hydraulic motor and the hydraulic cylinders according to a predetermined manner, so that the boom distal end 20 moves with the concrete outlet E. Preferably, the reference coordinate system O and the basic coordinate system coincide with each other, so as to conveniently controlling the movement path of the boom distal end 20 by the intelligent control system.

When the boom distal end 20 moves with the position of the concrete outlet, it is possible to move the boom system 8 under the guiding operation of the operator to the predetermined concrete pouring position, so as to ensure the quality of the concrete pouring work.

Referring to Fig. 11, in order to facilitate the guiding operation of the operator, a manipulating handle 1010 may be provided on the hose 17. Besides, associated control device 1011 may be provided on the manipulating handle 1010, so that the operation mode may be selected in particular operating conditions. For example, when a following mode is selected, the boom distal end 20 is adjusted with the position of the concrete outlet E; or in the case of emergency, the boom system 8 may be stopped by an emergency mode, or the like.

**Claims**

1. A device for detecting position of a concrete outlet of a concrete pump truck, comprising a processor (910), a time counter (920), a dynamic sensor (930) and at least two fixed-point sensors (940); wherein a distance between each fixed-point sensor (940) and the dynamic sensor (930) is less than a predetermined value, there is a predetermined position relationship between the dynamic sensor (930) and the concrete outlet (E) of a hose (17) of the concrete pump truck, fixed-point sensors (940) are fixed to predetermined detecting base points respectively, the detecting base points have different coordinate parameters in one reference coordinate system (0);

wherein one kind of sensor of the dynamic sensor (930) and the fixed-point sensor (940) at least has one of an ultrasonic wave transmitter and an ultrasonic wave receiver, the other kind of sensor has the other one of the ultrasonic wave receiver and the ultrasonic wave transmitter, and the ultrasonic wave receiver in one kind of sensor is configured to receive an ultrasonic wave sent by the ultrasonic wave transmitter in the other kind of sensor;

wherein the time counter (920) is configured to obtain a transmission time of the ultrasonic wave in a predetermined path, which is determined according to a position relationship between the dynamic sensor (930) and each fixed-point sensor (940), according to a moment when the ultrasonic wave transmitter sends the ultrasonic wave and a moment when the ultrasonic wave receiver receives the ultrasonic wave; and

wherein the processor (910) is configured to respectively obtain distances between the detecting base points and the dynamic sensor (930) according to a preset transmission velocity of the ultrasonic wave and the transmission time obtained by the time counter (920), and to obtain real-time coordinate parameters of the concrete outlet (E) in the reference coordinate system (O) according to the obtained distances and the coordinate parameters of the detecting base points, **characterized in that**

the detecting base points are located on a distal segment boom (16) of a boom (9) of the concrete pump truck, and the dynamic sensor (930) is fixed to the hose (17) of the concrete pump truck.

2. The device for detecting position according to claim 1,
   wherein
   the dynamic sensor (930) has a first ultrasonic wave transmitter, each fixed-point sensor (940) has a first ultrasonic wave receiver;
   the first ultrasonic wave transmitter is triggered under a triggering command of the processor (910) to send the ultrasonic wave;
   each of the first ultrasonic wave receivers outputs a received instruction to the time counter (920) after receiving the ultrasonic wave sent by the first ultrasonic wave transmitter; and
   the time counter (920) obtains the transmission time of the ultrasonic wave going between the dynamic sensor (930) and each fixed-point sensor (940) according to the triggering command and the received instruction of the processor (910).

3. The device for detecting position according to claim 1, wherein
   each of the fixed-point sensors (940) has a first ultrasonic wave transmitter, the dynamic sensor (930) has a first ultrasonic wave receiver;
   each of the first ultrasonic wave transmitters is triggered under a triggering command of the processor (910) to send the ultrasonic wave with a predetermined frequency, the frequencies of the ultrasonic waves sent by the first ultrasonic wave transmitters of the fixed-point sensors (940) are different from each other;
   the first ultrasonic wave receiver outputs a predetermined received instruction to the time counter (920) after receiving the ultrasonic wave with the predetermined frequency sent by each first ultrasonic wave transmitter; and
   the time counter (920) obtains the transmission time of the ultrasonic wave going between each fixed-point sensor (940) and the dynamic sensor (930) according to the triggering command and the predetermined received instruction of the processor (910).

4. The device for detecting position according to claim 1, wherein
   each of the fixed-point sensors (940) has a first ultrasonic wave transmitter and a second ultrasonic wave receiver;
   the dynamic sensor (930) has a first ultrasonic wave receiver and at least two second ultrasonic wave transmitters respectively corresponding to the fixed-point sensors (940);
   each of the first ultrasonic wave transmitters is triggered under a triggering command of the processor (910) to send an initial ultrasonic wave with a predetermined frequency, the frequencies of the initial ultrasonic waves sent by the first ultrasonic wave transmitters of the fixed-point sensors (940) are different from each other; each of the second ultrasonic wave receivers outputs a predetermined received instruction to the time counter (920) after receiving a feedback ultrasonic wave with a predetermined frequency;
   the first ultrasonic wave receiver sends a triggering signal to one predetermined second ultrasonic wave transmitter according to a predetermined strategy after receiving the initial ultrasonic wave with the predetermined frequency sent by each of the first ultrasonic wave transmitters, so as to allow the second ultrasonic wave transmitter to send the feedback ultrasonic wave with the predetermined frequency, and the frequencies of the feedback ultrasonic waves sent by the second ultrasonic wave transmitters are different from each other; and
the time counter (920) obtains the transmission time of the ultrasonic wave going from each fixed-point sensor (940) to the dynamic sensor (930) and then returning to the fixed-point sensor (940) according to the triggering command and the predetermined received instruction of the processor (910).

5. The device for detecting position according to claim 1, wherein
the dynamic sensor (930) has a first ultrasonic wave transmitter and a second ultrasonic wave receiver; each of the fixed-point sensors (940) has a first ultrasonic wave receiver and a second ultrasonic wave transmitter;
the first ultrasonic wave transmitter is triggered under a triggering command of the processor (910) to send an initial ultrasonic wave; the second ultrasonic wave receiver is configured to output a predetermined received instruction after receiving a feedback ultrasonic wave with a predetermined frequency sent by each of the second ultrasonic wave transmitters;
the first ultrasonic wave receiver of each fixed-point sensor (940) is configured to send a triggering signal to the second ultrasonic wave transmitter of this fixed-point sensor (940) after receiving the initial ultrasonic wave sent by the first ultrasonic wave transmitter, so as to allow the second ultrasonic wave transmitter to send the feedback ultrasonic wave with the predetermined frequency, and frequencies of the feedback ultrasonic waves sent by the second ultrasonic wave transmitters of the fixed-point sensors (940) are different from each other; and
the time counter (920) obtains the transmission time of the ultrasonic wave going from the dynamic sensor (930) to each fixed-point sensor (940) and then returning to the dynamic sensor (930) according to the triggering command and the predetermined received instruction of the processor (910).

6. The device for detecting position according to anyone of claims 1 to 5, further comprising a storage unit (950) and a designated unit (960); wherein
the storage unit (950) stores designated coordinate parameters of the dynamic sensor (930) in the reference coordinate system (0) when the concrete pump truck is in a predetermined state;
the designated unit (960) obtains the preset transmission velocity of the ultrasonic wave according to the obtained transmission time of the ultrasonic wave in the predetermined path and the predetermined strategy.

7. The device for detecting position according to claim 6, further comprising a designated triggering unit for triggering the designated unit (960) in a predetermined time.

8. The device for detecting position according to anyone of claims 1 to 7, wherein
the processor (910) also obtains a real-time movement direction and/or a real-time movement velocity of the concrete outlet (E) in the reference coordinate system (0) according to the obtained real-time coordinate parameters and the preset initial coordinate parameters of the concrete outlet (E) in the reference coordinate system (0).

9. A concrete pump truck , comprising a base (10), a rotating platform (11) and a boom (9), wherein the rotating platform (11) is mounted on the base (10) by a swivelling mechanism, the boom (9) comprises a hose (17) and a plurality of boom segments which are hinged in sequence, a basic boom (12) of the boom (9) is connected with the rotating platform (11), the hose (17) is connected to a boom distal end (20) of the boom (9); the concrete pump truck further comprises an intelligent control system for controlling position of the boom distal end (20) in a predetermined basic coordinate system, **characterized by** further comprising the device for detecting position as claimed in anyone of the preceding claims 1 to 8, wherein the intelligent control system controls the position of the boom distal end (20) according to information obtained by the processor (910).

10. A position detecting method for detecting position of a concrete outlet of a concrete pump truck, comprising the steps of S110, obtaining a transmission time of an ultrasonic wave in a predetermined path which is determined according to a position relationship between a dynamic reference point (D) and at least two predetermined detecting base points, wherein there is a predetermined position relationship between the dynamic reference point (D) and the concrete outlet (E), a distance between each detecting base point and the dynamic reference point (D) is less than a predetermined value, and the detecting base points have different coordinate parameters in one reference coordinate system (O);
S120, respectively obtaining distances between the detecting base points and the dynamic reference point (D) according to a preset transmission velocity of the ultrasonic wave and the transmission time of the ultrasonic wave in the predetermined path; and
S130, obtaining real-time coordinate parameters of the concrete outlet (E) in the reference coordinate system (0) according to the obtained distances and the coordinate parameters of the detecting base point,
**characterized in that** step S110 comprises obtaining the transmission time according to a position relationship between a dynamic reference point (D) located on a hose (17) of the concrete pump truck and at least two predetermined detecting base points located on a distal segment boom (16) of a boom (9) of the concrete pump truck.

11. The position detecting method according to claim 10, wherein step S110 comprises the steps of S111, a first ultrasonic wave transmitter located at the dynamic reference point (D) sending the ultrasonic wave;
S 112, a first ultrasonic wave receiver located at each detecting base point receiving the ultrasonic wave sent by the first ultrasonic wave transmitter; and
S113, obtaining the transmission time of the ultrasonic wave going between the dynamic reference point (D) and each detecting base point according to a moment when the first ultrasonic wave transmitter sends the ultrasonic wave and a moment when corresponding first ultrasonic wave receiver receives the ultrasonic wave.

12. The position detecting method according to claim 10, wherein step S110 comprises the steps of

S111, a first ultrasonic wave transmitter located at each detecting base point sending the ultrasonic wave with a predetermined frequency, wherein frequencies of the ultrasonic waves sent by the first ultrasonic wave transmitters of the detecting base points are different from each other;
S112, a first ultrasonic wave receiver located at the dynamic reference point (D) receiving the ultrasonic wave with the predetermined frequency sent by each first ultrasonic wave transmitter; and
S 113, obtaining the transmission time of the ultrasonic wave going between each detecting base point and the dynamic reference point (D) according to a moment when corresponding first ultrasonic wave transmitter sends the ultrasonic wave with the predetermined frequency and a moment when the first ultrasonic wave receiver receives the ultrasonic wave with the predetermined frequency.

13. The position detecting method according to claim 10, wherein step S110 comprises the steps of

S111, a first ultrasonic wave transmitter located at each detecting base point sending an initial ultrasonic wave with a predetermined frequency, wherein frequencies of the initial
ultrasonic waves sent by the first ultrasonic wave transmitters of the detecting base points are different from each other;
S 112, a first ultrasonic wave receiver located at the dynamic reference point (D) receiving the initial ultrasonic wave with the predetermined frequency sent by each first ultrasonic wave transmitter, and after the initial ultrasonic wave with the predetermined frequency is received, a predetermined second ultrasonic wave transmitter on the dynamic reference point (D) sending a feedback ultrasonic wave with a predetermined frequency; wherein the dynamic reference point (D) has at least two second ultrasonic wave transmitters respectively corresponding to the detecting base points, and frequencies of the feedback ultrasonic waves sent by the second ultrasonic wave transmitters are different from each other;
S 113, a second ultrasonic wave receiver of each detecting base point receiving the feedback ultrasonic wave with the predetermined frequency sent by each second ultrasonic wave transmitter; and
S 114, obtaining the transmission time of the ultrasonic wave going from each detecting base point to the dynamic reference point (D) and then returning to the detecting base point according to a moment when each first ultrasonic wave transmitter sends the initial ultrasonic wave with the predetermined frequency and a moment when each second ultrasonic wave receiver receives the feedback ultrasonic wave with the predetermined frequency.

14. The position detecting method according to claim 10, wherein step S110 comprises the steps of

S111, a first ultrasonic wave transmitter of the dynamic reference point (D) sending an initial ultrasonic wave;
S112, a first ultrasonic wave receiver of each detecting base point receiving the initial ultrasonic wave sent by the first ultrasonic wave transmitter, and after the initial ultrasonic wave is received, a second ultrasonic wave transmitter of each detecting base point sending a
feedback ultrasonic wave with a predetermined frequency; wherein frequencies of the feedback ultrasonic waves sent by the second ultrasonic wave transmitters of the detecting base points are different from each other;
S 113, a second ultrasonic wave receiver of the dynamic reference point (D) receiving the feedback ultrasonic wave with the predetermined frequency sent by each second ultrasonic wave transmitter; and
S 114, obtaining the transmission time of the ultrasonic wave going from the dynamic reference point (D) to each detecting base point and then returning to the dynamic reference point (D) according to a moment when the first ultrasonic wave transmitter sends the initial ultrasonic wave and a moment when the second ultrasonic wave receiver receives the feedback ultrasonic wave with the predetermined frequency.

**15.** The position detecting method according to anyone of claims 10 to 14, wherein before step S110, the position detecting method further comprises the step of
S 100, allowing the concrete pump truck to be in a predetermined state in which the dynamic reference point (D) has predetermined designated coordinate parameters in the reference coordinate system (O);
after step S 110, the position detecting method comprises the step of S120a, obtaining a preset transmission velocity of the ultrasonic wave according to the obtained transmission time of the ultrasonic wave in the predetermined path and the designated coordinate parameters; then allowing the concrete pump truck to be in a operation state, and the method returning to step S110.

**16.** The position detecting method according to anyone of claims 10 to 14, wherein
before step S110, the position detecting method further comprises the step of S109, determining initial coordinate parameters of the concrete outlet (E) in the reference coordinate system (0);
after step S 130, the position detecting method further comprises the step of S140, obtaining a real-time movement direction and a real-time movement velocity of the concrete outlet (E) in the reference coordinate system (O) according to the obtained real-time coordinate parameters and the initial coordinate parameters of the concrete outlet (E) in the reference coordinate system (0).

**17.** The position detecting method according to claim 16, wherein after step S140, the position detecting method further comprises the step of S150, updating the initial coordinate parameters to be the real-time coordinate parameters, and the method returning to step S 110.

**Patentansprüche**

**1.** Vorrichtung zur Erfassung einer Position eines Betonauslasses eines Betonpumpenfahrzeugs, aufweisend: einen Prozessor (910), einen Zeitzähler (920), einen dynamischen Sensor (930) und mindestens zwei Festpunkt-Sensoren (940); wobei ein Abstand zwischen jedem Festpunkt-Sensor (940) und dem dynamischen Sensor (930) kleiner als ein vorbestimmter Wert ist, wobei es eine vorbestimmte Positionsbeziehung zwischen dem dynamischen Sensor (930) und dem Betonauslass (E) eines Schlauches des Betonpumpenfahrzeugs gibt, wobei Festpunkt-Sensoren (940) an vorbestimmten Erfassungs-Basispunkten fixiert sind, wobei die Erfassungs-Basispunkte verschiedene Koordinatengrößen in einem Bezugskoordinatensystem (O) haben;
wobei eine Sensorart des dynamischen Sensors (930) und des Festpunkt-Sensors (940) mindestens einen Ultraschallwellensender oder einen Ultraschallwellenempfänger aufweist, und die andere Sensorart den anderen Ultraschallwellenempfänger oder Ultraschallwellensender aufweist, und der Ultraschallwellenempfänger der einen Sensorart konfiguriert ist, um eine durch den Ultraschallwellensender der anderen Sensorart gesendete Ultraschallwelle zu empfangen;
wobei der Zeitzähler (920) konfiguriert ist, eine Übertragungszeit der Ultraschallwelle auf einer vorbestimmten Bahn zu ermitteln, welche gemäß einer Positionsbeziehung zwischen dem dynamischen Sensor (930) und jedem Festpunkt-Sensor (940) bestimmt wird, gemäß ein Zeitpunkt, in dem der Ultraschallwellensender die Ultraschallwelle sendet und einem Zeitpunkt, in dem der Ultraschallwellenempfänger die Ultraschallwelle empfängt; und
wobei der Prozessor (910) konfiguriert ist, jeweils Abstände zwischen den Erfassungs-Basispunkten und dem dynamischen Sensor (930) gemäß einer voreingestellten Übertragungsgeschwindigkeit der Ultraschallwelle und der durch den Zeitzähler (920) ermittelten Übertragungszeit zu ermitteln, und um Echtzeit-Koordinatengrößen des Betonauslasses (E) in dem Bezugskoordinatensystem (O) gemäß den ermittelten Abständen und den Koordinatengrößen der Erfassungs-Basispunkte zu ermitteln, **dadurch gekennzeichnet, dass** sich die Erfassungs-Basispunkte an einem entfernten Auslegersegment (16) eines Auslegers (9) des Betonpumpenfahrzeugs befinden und er dynamische Sensor (930) an dem Schlauch des Betonpumpenfahrzeugs fixiert ist.

**2.** Vorrichtung zur Erfassung einer Position nach Anspruch 1,
wobei
der dynamische Sensor (930) einen ersten Ultraschallwellensender hat und jeder Festpunkt-Sensor (940) einen ersten Ultraschallwellenempfänger hat;
der erste Ultraschallwellensender durch einen Auslösebefehl des Prozessors (910) ausgelöst wird, um die Ultraschallwelle zu senden;
jeder der ersten Ultraschallwellenempfänger eine empfangene Anweisung an den Zeitzähler (920) ausgibt, nachdem die durch den ersten Ultraschallwellensender gesendete Ultraschallwelle empfangen wurde; und
der Zeitzähler (920) die Übertragungszeit der Ultraschallwelle zwischen dem dynamischen Sensor (930) und jedem Festpunkt-Sensor (940) gemäß dem Auslösebefehl und der empfangenen Anweisung des Prozessors (910) ermittelt.

3. Vorrichtung zur Erfassung einer Position nach Anspruch 1,
   wobei
   jeder der Festpunkt-Sensoren (940) einen ersten Ultraschallwellensender hat, der dynamische Sensor (930) einen ersten Ultraschallwellenempfänger hat;
   jeder der ersten Ultraschallwellensender durch einen Auslösebefehl des Prozessors (910) ausgelöst wird, um die Ultraschallwelle mit einer vorbestimmten Frequenz zu senden, wobei sich die Frequenzen der durch den ersten Ultraschallwellensender der Festpunkt-Sensoren gesendeten Ultraschallwellen (940) voneinander unterscheiden, der erste Ultraschallwellenempfänger eine vorbestimmte empfangene Anweisung an den Zeitzähler (920) ausgibt, nachdem die von jedem ersten Ultraschallwellensender gesendete Ultraschallwelle mit der vorbestimmten Frequenz empfangen wurde; und der Zeitzähler (920 die Übertragungszeit der Ultraschallwelle zwischen jedem Festpunkt-Sensor (940) und dem dynamischen Sensor (930) gemäß dem Auslösebefehl und der vorbestimmten empfangenen Anweisung des Prozessors (910) ermittelt.

4. Vorrichtung zur Erfassung einer Position nach Anspruch 1.
   wobei
   jeder der Festpunkt-Sensoren (940) einen ersten Ultraschallwellensender und einen zweiten Ultraschallwellenempfänger hat;
   der dynamische Sensor (930) einen ersten Ultraschallwellenempfänger und mindestens zwei zweite Ultraschallwellensender hat, die jeweils mit den Festpunkt-Sensoren (940) korrespondieren;
   jeder der ersten Ultraschallwellensender durch einen Auslösebefehl des Prozessors (910) ausgelöst wird, um eine Ausgangs-Ultraschallwelle mit einer vorbestimmten Frequenz zu senden, wobei sich die Frequenzen der durch den ersten Ultraschallwellensender der Festpunkt-Sensoren (940) gesendeten Ausgangs-Ultraschallwellen voneinander unterscheiden;
   jeder der zweiten Ultraschallwellencmpfänger eine vorbestimmte empfangene Anweisung an dem Zeitzähler (920) ausgibt, nachdem eine Rückkopplungs-Ultraschallwelle mit einer vorbestimmten Frequenz empfangen wurde;
   der erste Ultraschallweilenempfänger ein Auslösesignal an einen vorbestimmten zweiten Ultraschallwellensender gemäß einer vorbestimmten Strategie sendet, nachdem die durch jeden der ersten Ultraschallwellensender gesendeten Ausgangs-Ultraschallwelle mit der vorbestimmten Frequenz empfangen wurde, um somit dem zweiten Ultraschallwellensender zu ermöglichen, die Rückkopplungs-Ultraschallwelle mit der vorbestimmten Frequenz zu senden, wobei sich die Frequenzen der durch die zweiten Ultraschallwellensender gesendeten Rückkopplungs-Ultraschallwellen voneinander unterscheiden; und
   der Zeitzähler (920) die Übertragungszeitzeit der Ultraschallwelle von jedem Festpunkt-Sensor (940) an den dynamischen Sensor (930) und dann umgekehrt zu dem Festpunkt-Sensor (940) gemäß dem Auslösebefehl und der vorbestimmten empfangenen Anweisung des Prozessors (910) ermittelt.

5. Vorrichtung zur Erfassung einer Position nach Anspruch 1,
   wobei
   der dynamische Sensor (930) einen ersten Ultraschallwellensender und einen zweiten Ultraschallwellenempfänger hat; jeder der Festpunkt-Sensoren (940) einen ersten Ultraschallwellenempfänger und einen zweiten Ultraschallwellensender hat;
   der erste Ultraschallwellensender durch einen Auslösebefehl des Prozessors (910) ausgelöst wird, um eine Ausgangs-Ultraschallwelle zu senden; der zweite Ultraschallwellenempfänger konfiguriert ist, eine vorbestimmte empfangene Anweisung auszugeben, nachdem eine von jedem der zweiten Ultraschallwellensender gesendete Rückkopplungs-Ultraschallwelle mit einer vorbestimmten Frequenz empfangen wurde;
   der erste Ultraschallwellenempfänger jedes Festpunkt-Sensors (940) konfiguriert ist, ein Auslösesignal an den zweiten Ultraschallwellensender dieses Festpunkt-Sensors (940) zu senden, nachdem die durch den ersten Ultraschallwellensender gesendete Ausgangs-Ultraschallwelle empfangen wurde, um somit dem zweiten Ultraschallwellensender zu ermöglichten, die Rückkopplungs-Ultraschallwelle mit der vorbestimmten Frequenz zu senden, wobei sich die Frequenzen der durch die zweiten Ultraschallwellensender der Festpunkt-Sensoren (940) gesendeten Rückkopplungs-Ultraschallwellen voneinander unterscheiden; und
   der Zeitzähler (920) die Übertragungszeit der Ultraschallwelle vom dynamischen Sensor (930) zu jedem Festpunkt-Sensor (940) und dann umgekehrt zu dem dynamischen Sensor (930) gemäß dem Auslösebefehl und der vorbestimmten empfangenen Anweisung des Prozessors (910) ermittelt.

6. Vorrichtung zur Erfassung einer Position nach einem der Ansprüche 1 bis 5, ferner aufweisend: eine Speichereinheit (950) und eine ausgewiesene Einheit (960); wobei die Speichereinheit (950) ausgewiesene Koordinatengrößen des dynamischen Sensors (930) in dem Bezugskoordinatensystem (O) speichert, wenn sich das Betonpumpenfahrzeug in einem vorbestimmten Zustand befindet, wobei die ausgewiesene Einheit (960) die voreingestellte Übertragungsgeschwindigkeit der Ultraschallwelle gemäß der ermittelten Übertragungszeit der Ultraschallwelle auf der vorbestimmten Bahn und der vorbestimmten Strategie ermittelt.

7. Vorrichtung zur Erfassung einer Position nach Anspruch 6, ferner aufweisend:

eine ausgewiesene Auslöseeinheit zum Auslösen der ausgewiesenen Einheit (960) in einer vorbestimmten Zeit.

8. Vorrichtung zur Erfassung einer Position nach einem der Ansprüche 1 bis 7, wobei der Prozessor (910) auch eine Echtzeit-Bewegungsrichtung und/oder eine Echtzeit-Bewegungsgeschwindigkeit des Betonauslasses (E) in dem Bezugskoordinatensystem (O) gemäß den ermittelten Echtzeit-Koordinatengrößen und den voreingestellten Ausgangs-Koordinatengrößen des Betonauslasses (E) in dem Bezugskoordinatensystem (O) ermittelt.

9. Betonpumpenfahrzeug, aufweisend: eine Basis (10), eine rotierende Plattform (11) und einen Ausleger (9), wobei die rotierende Plattform (11) durch einen Schwenkmechanismus auf der Basis (10) montiert ist, wobei der Ausleger (9) einen Schlauch (17) und eine Vielzahl von Auslegersegmenten aufweist, die nacheinander gelenkig gelagert sind, wobei ein Basisausleger (12) des Auslegers (9) mit der rotierenden Plattform (11) verbunden ist, wobei der Schlauch (17) mit einem entfernten Ende (20) des Auslegers (9) verbunden ist; wobei das Betonpumpenfahrzeug ferner ein intelligentes Steuerungssystem zum Steuern der Position des entfernten Endes (20) in einem vorbestimmten Basiskoordinatensystem aufweist, **gekennzeichnet dadurch, dass** das Betonpumpenfahrzeug ferner eine Vorrichtung zur Erfassung einer Position nach einem der Ansprüche 1 bis 8 aufweist, wobei das intelligente Steuerungssystem die Position des entfernten Endes (20) gemäß vom Prozessor (910) ermittelten Informationen steuert.

10. Positionserfassungsverfahren zur Erfassung einer Position eines Betonauslasses eines Betonpumpenfahrzeugs, aufweisend die Schritte:

S110, Ermitteln einer Übertragungszeit einer Ultraschallwelle auf einer vorbestimmten Bahn, welche gemäß einer Positionsbeziehung zwischen einem dynamischen Referenzpunkt (D) und mindestens zwei vorbestimmten Erfassungs-Basispunkten bestimmt wird, wobei es eine vorbestimmte Positionsbeziehung zwischen dem dynamischen Referenzpunkt (D) und dem Betonauslass (E) gibt, wobei ein Abstand zwischen jedem Erfassungs-Basispunkt und dem dynamischen Referenzpunkt (D) kleiner als ein vorbestimmter Wert ist, und die Erfassungs-Basispunkte unterschiedliche Koordinatengrößen in einem Bezugskoordinatensystem (O) haben;
S120, Ermitteln von Abständen zwischen den jeweiligen Erfassungs-Basispunkten und dem dynamischen Referenzpunkt (D) gemäß einer voreingestellten Übertragungsgeschwindigkeit der Ultraschallwelle und der Übertragungszeit der Ultraschallwelle auf der vorbestimmten Bahn; und S130, Ermitteln von Echtzeit-Koordinatengrößen des Betonauslasses (E) in dem Bezugskoordinatensystem (O) gemäß den ermittelten Abständen und den Koordinatengrößen des Erfassung-Basispunktes,
**dadurch gekennzeichnet, dass** Schritt S110 aufweist: Ermitteln einer Übertragungszeit gemäß einer Positionsbeziehung zwischen einem sich auf einem Schlauch (17) des Betonpumpenfahrzeugs befindenden dynamischen Referenzpunkt (D) und mindestens zwei sich auf einem entfernten Auslegersegment (16) eines Auslegers (9) des Betonpumpenfahrzeugs befindenden, vorbestimmten Erfassung-Basispunkten.

11. Positionserfassungsverfahren nach Anspruch 10, Schritt S110 ausweisen die Schritte:

S111, ein erster, sich an dem dynamischen Referenzpunkt (D) befindender Ultraschallwellensender sendet die Ultraschallwelle;
S112, ein erster, sich an jedem Erfassungs-Basispunkt befindender Ultraschallwellenempfänger empfängt eine durch den ersten Ultraschallwellensender gesendete Ultraschallwelle; und
S113 Ermitteln der Übertragungszeit der Ultraschallwelle zwischen dem dynamischen Referenzpunkt (D) und jedem Erfassungs-Basispunkt gemäß einem Zeitpunkt, in dem der erste Ultraschallwellensender die Ultraschallwelle sendet und einem Zeitpunkt, in dem ein korrespondierender erster Ultraschallwellenempfänger die Ultraschallwelle empfängt.

12. Positionserfassungsverfahren nach Anspruch 10, Schritt S110 aufweisend die Schritte:

S111, ein erster, sich an jedem Erfassungs-Basispunkt befindender Ultraschallwellensender sendet die Ultraschallwelle mit einer vorbestimmten Frequenz, wobei sich Frequenzen der durch die ersten Ultraschallwellensender der Erfässungs-Basispunkte gesendeten Ultraschallwellen voneinander unterscheiden;

S 112, ein erster, sich an dem dynamischen Referenzpunkt (D) befindender Ultraschallweltenempfänger empfängt die von jedem ersten Ultraschallwellensender gesendete Ultraschallwelle mit der vorbestimmtem Frequenz; und

S113, Ermitteln der Übertragungszeit der Ultraschallwelle zwischen jedem Ertassungs-Basispunkt und dem dynamischen Referenzpunkt (D) gemäß einem Zeitpunkt, in dem der korrespondierende, erste Ultraschallwellensender die Ultraschallwelle mit der vorbestimmten Frequenz sendet und einem Zeitpunkt, in dem der erste Ultraschallwellenempfänger die Ultraschallwelle mit der vorbestimmten Frequenz empfängt.

**13.** Positionserfassungsverfahren nach Anspruch 10, Schritt S110 aufweisend die Schritte:

S111, ein erster, sich an jedem Erfassungs-Basispunkt befindender Ultraschallwellensender sendet eine Ausgangs-Ultraschallwelle mit einer vorbestimmten Frequenz, wobei sich Frequenzen der durch die ersten Ultraschallwellensender der Erfassungs-Basispunkte gesendeten Ausgangs-Ultraschallwellen voneinander unterscheiden;

S112, ein erster sich an dem dynamischen Referenzpunkt (D) befindender Ultraschallwellenempfänger empfängt eine durch jeden ersten Ultraschallwellensender gesendete Ausgangs-Ultraschallwelle mit der vorbestimmten Frequenz, und nachdem die Ausgangs-Ultraschallwelle mit der vorbestimmten Frequenz empfangen wird, sendet ein vorbestimmter zweiter Ultraschallwellensender auf dem dynamischen Referenzpunkt (D) eine Rückkopplungs-Ultraschallwelle mit einer vorbestimmten Frequenz; wobei der dynamische Referenzpunkt (D) mindestens zwei zweite Ultraschallwellensender hat, die jeweils mit den Erfassungs-Basispunkten korrespondieren, und sich Frequenzen der von den zweiten Ultraschallwellensendern gesendeten Rückkopplungs-Ultraschallwellen voneinander unterscheiden;

S 113, ein zweiter Ultraschallwellenempfänger jedes Erfassungs-Basispunkts empfängt die von jedem zweiten Ultraschallwellensender gesendete Rückkopplungs-Ultraschallwelle mit der vorbestimmten Frequenz; und

S114, Ermitteln der Übertragungszeit der Ultraschallwelle von jedem Erfassung-Basispunkt zu dem dynamischen Referenzpunkt (D) und dann umgekehrt zu dem Erfassungs-Basispunkt gemäß einem Zeitpunkt, in dem jeder erste Ultraschallwellensender die Ausgangs-Ultraschallwelle mit der vorbestimmten Frequenz sendet und einem Zeitpunkt, indem jeder zweite Ultraschallwellenempfänger die Rückkopplungs-Ultraschallwelle mit der vorbestimmten Frequenz empfängt.

**14.** Positionserfassungsverfahren nach Anspruch 10, Schritt S110 aufweisend die Schritte:

S111, ein erster Ultraschallwellensender des dynamischen Referenzpunkts (D) sendet eine erste Ultraschallwelle;

S112, ein erster Ultraschallwellenempfänger jedes Erfassungs-Basispunktes empfängt die durch den ersten Ultraschallwellensender gesendete Ausgangs-Ultraschallwelle, und nachdem die Ausgangs-Ultraschallwelle empfangen wird, sendet ein zweiter Ultraschallwellensender jedes Erfassungs-Basispunktes eine Rückkopplungs-Ultraschallwelle mit einer vorbestimmten Frequenz; wobei sich Frequenzen der durch die zweiten Ultraschallwellensender der Erfassungs-Basispunkte gesendeten Rückkopplungs-Ultraschallwellen voneinander unterscheiden;

S113, ein zweiter Ultraschallwellenempfänger des dynamischen Referenzpunkt (D) empfängt die durch jeden zweiten Ultraschallwellensender gesendete Rückkopplungs-Ultraschallwelle mit der vorbestimmten Frequenz; und

S114, Ermitteln der Übertragungszeit der Ultraschallwelle von dem dynamischen Referenzpunkt (D) zu jedem Erfassungs-Basispunkt und dann umgekehrt zu dem dynamische Referenzpunkt (D) gemäß einem Zeitpunkt, in dem der erste Ultraschallwellensender die Ausgangs-Ultraschallwelle sendet und einen Zeitpunkt, in dem der zweite Ultraschallwellenempfänger die Rückkopplungs-Ultraschallwelle mit der vorbestimmten Frequenz empfängt.

**15.** Positionserfassungsverfahren nach einem der Ansprüche 10 bis 14, wobei das Positionserfassungsverfahren vor Schritt S110 ferner die Schritte aufweist:

S100, Ermöglichten, dass das Betonpumpenfahrzeug in einem vorbestimmten Zustand ist, in dem der dynamische Referenzpunkt (D) vorbestimmte ausgewiesene Koordinatengrößen in dem Bezugskoordinatensystem (O) hat;

wobei das Positionserlassungsverfahren nach dem Schritt S110 den Schritt aufweist: S120a, Ermitteln einer voreingestellten Übertragungsgeschwindigkeit der Ultraschallwelle gemäß der ermittelten Übertragungszeit der Ultraschallwelle auf der vorbestimmten Bahn und den ausgewiesenen Koordinatengrößen; anschließendes Ermöglichen, dass das Betonpumpenfahrzeug in einem Betriebszustand ist, und Zurückkehren des Verfahrens zu Schritt S110.

**16.** Positionserfassungsverfahren nach einem der Ansprüche 10 bis 14, wobei das Positionserfassungsverfahren vor Schritt S110 ferner die Schritte aufweist:

S109, Bestimmen von Ausgangs-Koordinatengrößen des Betonauslasses (E) in dem Bezugskoordinatensystem (O);
wobei das Positionserfassungsverfahren nach dem Schritt S130 ferner den Schritt aufweist:

S1440, Ermitteln einer Echtzeit-Bewegungsrichtung und einer Echtzeit-Bewegungsgeschwindigkeit des Betonauslasses (E) in dem Bezugskoordinatensystem (O) gemäß der ermittelten Echtzeit-Koordinatengrößen und der Ausgangs-Koordinatengrößen des Betonauslasses (E) in dem Bezugskoordinatensystem (O).

**17.** Positionserfassungsverfahren nach Anspruch 16, wobei das Positionserfassungsverfahren nach Schritt S140 ferner den Schritt aufweist:

S150, Aktualisieren der Ausgangs-Koordinatengrößen in Echtzeit-Koordinatengrößen und Zurückkehren des Verfahrens zu Schritt S110.

## Revendications

**1.** Dispositif de détection de la position d'un orifice de sortie de béton d'un camion-pompe à béton, comprenant un processeur (910), un compteur de temps (920), un capteur dynamique (930) et au moins deux capteurs de point fixe (940) ; dans lequel une distance entre chaque capteur de point fixe (940) et le capteur dynamique (930) est inférieure à une valeur prédéterminée, il existe une relation de position prédéterminée entre le capteur dynamique (930) et l'orifice de sortie de béton (E) d'un tuyau souple (17) du camion-pompe à béton, les capteurs de point fixe (940) sont fixés à des points de base de détection prédéterminés, respectivement, les points de base de détection ont des paramètres de coordonnées différents dans un système de coordonnées de référence (O) ; dans lequel un type de capteur du capteur dynamique (930) et du capteur de point fixe (940) comporte au moins l'un d'un émetteur d'ondes ultrasonores et d'un récepteur d'ondes ultrasonores, l'autre type de capteur comporte l'autre du récepteur d'ondes ultrasonores et de l'émetteur d'ondes ultrasonores, et le récepteur d'ondes ultrasonores dans un type de capteur est configuré pour recevoir une onde ultrasonore envoyée par l'émetteur d'ondes ultrasonores dans l'autre type de capteur ;
dans lequel le compteur de temps (920) est configuré pour obtenir un temps de transmission de l'onde ultrasonore dans un trajet prédéterminé, qui est déterminé en fonction d'une relation de position entre le capteur dynamique (930) et chaque capteur de point fixe (940), en fonction d'un moment où l'émetteur d'ondes ultrasonores envoie l'onde ultrasonore et d'un moment où le récepteur d'ondes ultrasonores reçoit l'onde ultrasonore ; et
dans lequel le processeur (910) est configuré pour obtenir respectivement des distances entre les points de base de détection et le capteur dynamique (930) en fonction d'une vitesse de transmission prédéfinie de l'onde ultrasonore et du temps de transmission obtenu par le compteur de temps (920), et pour obtenir des paramètres de coordonnées en temps réel de l'orifice de sortie de béton (E) dans le système de coordonnées de référence (O) en fonction des distances obtenues et des paramètres de coordonnées des points de base de détection, **caractérisé en ce que** les points de base de détection sont situés sur un bras de segment distal (16) d'un bras (9) du camion-pompe à béton, et le capteur dynamique (930) est fixé au tuyau souple (17) du camion-pompe à béton.

**2.** Dispositif de détection de position selon la revendication 1,
dans lequel
le capteur dynamique (930) comporte un premier émetteur d'ondes ultrasonores, chaque capteur de point fixe (940) comporte un premier récepteur d'ondes ultrasonores ;
le premier émetteur d'ondes ultrasonores est déclenché par une commande de déclenchement du processeur (910) pour envoyer l'onde ultrasonore ; chacun des premiers récepteurs d'ondes ultrasonores transmet une instruction reçue au compteur de temps (920) après avoir reçu l'onde ultrasonore envoyée par le premier émetteur d'ondes ultrasonores ;
et
le compteur de temps (920) obtient le temps de transmission de l'onde ultrasonore passant entre le capteur dynamique (930) et chaque capteur de point fixe (940) en fonction de la commande de déclenchement et de l'instruction reçue du processeur (910).

3. Dispositif de détection de position selon la revendication 1,
dans lequel
chacun des capteurs de point fixe (940) comporte un premier émetteur d'ondes ultrasonores, le capteur dynamique (930) comporte un premier récepteur d'ondes ultrasonores ;
chacun des premiers émetteurs d'ondes ultrasonores est déclenché par une commande de déclenchement du processeur (910) pour envoyer les ondes ultrasonores avec une fréquence prédéterminée, les fréquences des ondes ultrasonores envoyées par les premiers émetteurs d'ondes ultrasonores des capteurs de point fixe (940) sont différentes les unes des autres ;
le premier récepteur d'ondes d'ultrasonores transmet une instruction reçue prédéterminée au compteur de temps (920) après avoir reçu l'onde ultrasonore avec la fréquence prédéterminée envoyée par chaque premier émetteur d'ondes ultrasonores ; et
le compteur de temps (920) obtient le temps de transmission de l'onde ultrasonore passant entre chaque capteur de point fixe (940) et le capteur dynamique (930) en fonction de la commande de déclenchement et l'instruction reçue prédéterminée du processeur (910).

4. Dispositif de détection de position selon la revendication 1, dans lequel
chacun des capteurs de point fixe (940) comporte un premier émetteur d'ondes ultrasonores et un second récepteur d'ondes ultrasonores ;
le capteur dynamique (930) comporte un premier récepteur d'ondes d'ultrasonores et au moins deux seconds émetteurs d'ondes ultrasonores correspondant respectivement aux capteurs de point fixe (940) ; chacun des premiers émetteurs d'ondes ultrasonores est déclenché par une commande de déclenchement du processeur (910) pour envoyer une onde ultrasonore initiale avec une fréquence prédéterminée, les fréquences des ondes ultrasonores initiales envoyées par les premiers émetteurs d'ondes ultrasonores des capteurs de point fixe (940) sont différentes les unes des autres ; chacun des seconds récepteurs d'ondes ultrasonores transmet une instruction reçue prédéterminée au compteur de temps (920) après avoir reçu une onde ultrasonore de rétroaction avec une fréquence prédéterminée ; le premier récepteur d'ondes ultrasonores envoie un signal de déclenchement à un second émetteur d'ondes ultrasonores prédéterminé en fonction d'une stratégie prédéterminée après avoir reçu l'onde ultrasonore initiale avec la fréquence prédéterminée envoyée par chacun des premiers émetteurs d'ondes ultrasonores, de manière à permettre au second émetteur d'ondes ultrasonores d'envoyer l'onde ultrasonore de rétroaction avec la fréquence prédéterminée, et les fréquences des ondes ultrasonores de rétroaction envoyées par les seconds émetteurs d'ondes ultrasonores sont différentes les unes des autres ; et
le compteur de temps (920) obtient le temps de transmission de l'onde ultrasonore allant de chaque capteur de point fixe (940) au capteur dynamique (930) puis revenant au capteur de point fixe (940) en fonction de la commande de déclenchement et de l'instruction reçue prédéterminée du processeur (910).

5. Dispositif de détection de position selon la revendication 1,
dans lequel
le capteur dynamique (930) comporte un premier émetteur d'ondes ultrasonores et un second récepteur d'ondes ultrasonores ; chacun des capteurs de point fixe (940) comporte un premier récepteur d'ondes ultrasonores et un second émetteur d'ondes ultrasonores ;
le premier émetteur d'ondes ultrasonores est déclenché par une commande de déclenchement du processeur (910) pour envoyer une onde ultrasonores initiale ; le second récepteur d'ondes ultrasonores est configuré pour transmettre une instruction reçue prédéterminée après avoir reçu une onde ultrasonore de rétroaction avec une fréquence prédéterminée envoyée par chacun des seconds émetteurs d'ondes ultrasonores ;
le premier récepteur d'ondes ultrasonores de chaque capteur de point fixe (940) est configuré pour envoyer un signal de déclenchement au second émetteur d'ondes ultrasonores de ce capteur de point fixe (940) après avoir reçu l'onde ultrasonore initiale envoyée par le premier émetteur d'ondes ultrasonores, de manière à permettre au second émetteur d'ondes ultrasonores d'envoyer l'onde ultrasonore de rétroaction avec la fréquence prédéterminée, et les fréquences des ondes ultrasonores de rétroaction envoyées par les seconds émetteurs d'ondes ultrasonores des capteurs de point fixe (940) sont différentes les unes des autres ; et
le compteur de temps (920) obtient le temps de transmission de l'onde ultrasonore allant du capteur dynamique (930) à chaque capteur de point fixe (940) puis revenant au capteur dynamique (930) en fonction de la commande de déclenchement et l'instruction reçue prédéterminée du processeur (910).

6. Dispositif de détection de position selon l'une quelconque des revendications 1 à 5, comprenant en outre une unité de stockage (950) et une unité désignée (960) ; dans lequel

l'unité de stockage (950) stocke des paramètres de coordonnées désignés du capteur dynamique (930) dans le système de coordonnées de référence (O) lorsque le camion-pompe à béton est dans un état prédéterminé ; l'unité désignée (960) obtient la vitesse de transmission prédéfinie de l'onde ultrasonore en fonction du temps de transmission obtenu de l'onde ultrasonore dans le trajet prédéterminé et de la stratégie prédéterminée.

**7.** Dispositif de détection de position selon la revendication 6, comprenant en outre une unité de déclenchement désignée pour déclencher l'unité désignée (960) dans un temps prédéterminé.

**8.** Dispositif de détection de position selon l'une quelconque des revendications 1 à 7, dans lequel le processeur (910) obtient également une direction de mouvement en temps réel et/ou une vitesse de mouvement en temps réel de l'orifice de sortie de béton (E) dans le système de coordonnées de référence (O) en fonction des paramètres de coordonnées en temps réel obtenus et des paramètres de coordonnées initiaux prédéfinis de l'orifice de sortie de béton (E) dans le système de coordonnées de référence (O).

**9.** Camion-pompe à béton, comprenant une base (10), une plate-forme tournante (11) et un bras (9), dans lequel la plate-forme tournante (11) est montée sur la base (10) par un mécanisme de pivotement, le bras (9) comprend un tuyau souple (17) et une pluralité de segments de bras qui sont articulés en séquence, un bras de base (12) du bras (9) est relié à la plate-forme tournante (11), le tuyau souple (17) est relié à une extrémité distale de bras (20) du bras (9) ; le camion-pompe à béton comprend en outre un système de commande intelligent pour commander la position de l'extrémité distale de bras (20) dans un système coordonnées de base prédéterminé, **caractérisé en ce qu'**il comprend en outre le dispositif de détection de position selon l'une quelconque des revendications précédentes 1 à 8, dans lequel le système de commande intelligent commande la position de l'extrémité distale de bras (20) en fonction des informations obtenues par le processeur (910),

**10.** Procédé de détection de position pour détecter la position d'un orifice de sortie de béton d'un camion-pompe à béton, comprenant les étapes consistant à :

S110, obtenir un temps de transmission d'une onde ultrasonore dans un trajet prédéterminé qui est déterminé en fonction d'une relation de position entre un point de référence dynamique (D) et au moins deux de points de base de détection prédéterminés, dans lequel il existe une relation de position prédéterminée entre le point de référence dynamique (D) et l'orifice de sortie du béton (E), une distance entre chaque point de base de détection et le point de référence dynamique (D) est inférieure à une valeur prédéterminée, et les points de détection de base ont des paramètres de coordonnées différents dans un système de coordonnées de référence (O) ;

S120, obtenir respectivement des distances entre les points de base de détection et le point de référence dynamique (D) en fonction d'une vitesse de transmission prédéfinie de l'onde ultrasonore et du temps de transmission de l'onde ultrasonore dans le trajet prédéterminé ; et

S130, obtenir des paramètres de coordonnées en temps réel de l'orifice de sortie de béton (E) dans le système de coordonnées de référence (O) en fonction des distances obtenues et des paramètres de coordonnées du point de base de détection,

**caractérisé en ce que** l'étape S110 comprend d'obtenir le temps de transmission en fonction d'une relation de position entre un point de référence dynamique (D) situé sur un tuyau souple (17) du camion-pompe à béton et au moins deux points de base de détection prédéterminés situés sur un bras de segment distal (16) d'un bras (9) du camion-pompe à béton.

**11.** Procédé de détection de position selon la revendication 10, dans lequel l'étape S110 comprend les étapes consistant à :

S111, un premier émetteur d'ondes ultrasonores situé au niveau du point de référence dynamique (D) envoie l'onde ultrasonore ;

S112, un premier récepteur d'ondes ultrasonores situé au niveau de chaque point de base de détection reçoit l'onde ultrasonore envoyée par le premier émetteur d'ondes ultrasonores ; et

S113, obtenir le temps de transmission de l'onde ultrasonore passant entre le point de référence dynamique (D) et chaque point de base de détection en fonction d'un moment où le premier émetteur d'ondes ultrasonores envoie l'onde ultrasonore et un moment où le premier récepteur d'ondes ultrasonores correspondant reçoit l'onde ultrasonore.

**12.** Procédé de détection de position selon la revendication 10, dans lequel l'étape S110 comprend les étapes consistant à :

S111, un premier émetteur d'ondes ultrasonores situé au niveau de chaque point de base de détection envoie l'onde ultrasonore avec une fréquence prédéterminée, dans lequel les fréquences des ondes ultrasonores envoyées par les premiers émetteurs d'ondes ultrasonores des points de base de détection sont différentes les unes des autres ;

S112, un premier récepteur d'ondes ultrasonores situé au niveau du point de référence dynamique (D) reçoit l'onde ultrasonore avec la fréquence prédéterminée envoyée par chaque premier émetteur d'ondes ultrasonores ; et

S113, obtenir le temps de transmission de l'onde ultrasonore passant entre chaque point de base de détection et le point de référence dynamique (D) en fonction d'un moment où le premier émetteur d'ondes ultrasonores correspondant envoie l'onde ultrasonore avec la fréquence prédéterminée et un moment où le premier récepteur d'ondes ultrasonores reçoit l'onde ultrasonore avec la fréquence prédéterminée.

**13.** Procédé de détection de position selon la revendication 10, dans lequel l'étape S110 comprend les étapes consistant à :

S111, un premier émetteur d'ondes ultrasonores situé au niveau de chaque point de base de détection envoie une onde ultrasonore initiale avec une fréquence prédéterminée, dans lequel les fréquences des ondes ultrasonores initiales envoyées par les premiers émetteurs d'ondes ultrasonores des points de base de détection sont différentes les unes des autres ;

S112, un premier récepteur d'ondes ultrasonores situé au niveau du point de référence dynamique (D) reçoit l'onde ultrasonore initiale avec la fréquence prédéterminée envoyée par chaque premier émetteur d'ondes ultrasonores, et une fois que l'onde ultrasonore initiale avec la fréquence prédéterminée est reçue, un second émetteur d'ondes ultrasonores prédéterminé sur le point de référence dynamique (D) envoie une onde ultrasonore de rétroaction avec une fréquence prédéterminée ; dans lequel le point de référence dynamique (D) comporte au moins deux seconds émetteurs d'ondes ultrasonores correspondant respectivement aux points de base de détection, et les fréquences des ondes ultrasonores de rétroaction envoyées par les seconds émetteurs d'ondes ultrasonores sont différentes les unes des autres ;

S113, un second récepteur d'ondes ultrasonores de chaque point de base de détection reçoit l'onde ultrasonore de rétroaction avec la fréquence prédéterminée envoyée par chaque second émetteur d'ondes ultrasonores ; et

S114, obtenir le temps de transmission de l'onde ultrasonore allant de chaque point de base de détection au point de référence dynamique (D) puis revenant au point de base de détection en fonction d'un moment où chaque premier émetteur d'ondes ultrasonores envoie l'onde ultrasonore initiale avec la fréquence prédéterminée et un moment où chaque second récepteur d'ondes ultrasonores reçoit l'onde ultrasonore de rétroaction avec la fréquence prédéterminée.

**14.** Procédé de détection de position selon la revendication 10, dans lequel l'étape S110 comprend les étapes consistant à :

S111, un premier émetteur d'ondes ultrasonores du point de référence dynamique (D) envoie une onde ultrasonore initiale ;

S112, un premier récepteur d'ondes ultrasonores de chaque point de base de détection reçoit l'onde ultrasonore initiale envoyée par le premier émetteur d'ondes ultrasonores, et une fois que l'onde ultrasonore initiale est reçue, un second émetteur d'ondes ultrasonores de chaque point de base de détection envoie une onde ultrasonore de rétroaction avec une fréquence prédéterminée ; dans lequel les fréquences des ondes ultrasonores de rétroaction envoyées par les seconds émetteurs d'ondes ultrasonores des points de base de détection sont différentes les unes des autres ;

S113, un second récepteur d'ondes ultrasonores du point de référence dynamique (D) reçoit l'onde ultrasonore de rétroaction avec la fréquence prédéterminée envoyée par chaque second émetteur d'ondes ultrasonores ; et

S114, obtenir le temps de transmission de l'onde ultrasonore allant du point de référence dynamique (D) à chaque point de base de détection puis revenant au point de référence dynamique (D) en fonction d'un moment où le premier émetteur d'ondes ultrasonores envoie l'onde ultrasonore initiale et un moment où le second récepteur d'ondes ultrasonores reçoit l'onde ultrasonore de rétroaction avec la fréquence prédéterminée.

**15.** Procédé de détection selon l'une quelconque des revendications 10 à 14, dans lequel, avant l'étape S110, le procédé de détection de position comprend en outre l'étape consistant à :

S100, laisser le camion-pompe à béton être dans un état prédéterminé dans lequel le point de référence dynamique (D) a des paramètres de coordonnées désignés prédéterminés dans le système de coordonnées de référence (O) ; après l'étape S110, le procédé de détection de position comprend l'étape consistant à :

S120a, obtenir une vitesse de transmission prédéfinie de l'onde ultrasonore en fonction du temps de transmission obtenu de l'onde ultrasonore dans le trajet prédéterminé et des paramètres de coordonnées désignés ; puis laisser le camion-pompe à béton être dans un état de fonctionnement, et le procédé revient à l'étape S110.

16. Procédé de détection de position selon l'une quelconque des revendications 10 à 14, dans lequel avant l'étape S110, le procédé de détection de position comprend en outre l'étape consistant à :

S109, déterminer des paramètres de coordonnées initiaux de l'orifice de sortie de béton (E) dans le système de coordonnées de référence (O) ;
après l'étape S130, le procédé de détection de position comprend en outre l'étape consistant au :

S140, obtenir une direction de mouvement en temps réel et une vitesse de mouvement en temps réel de l'orifice de sortie de béton (E) dans le système de coordonnées de référence (O) en fonction des paramètres de coordonnées en temps réel obtenus et des paramètres de coordonnées initiaux de l'orifice de sortie de béton (E) dans le système de coordonnées de référence (O).

17. Procédé de détection de position selon la revendication 16, dans lequel, après l'étape S140, le procédé de détection de position comprend en outre l'étape consistant à :

S150, mettre à jour les paramètres de coordonnées initiaux pour être les paramètres de coordonnées en temps réel, et le procédé revient à l'étape S110.

Fig. 1

S110 —— obtaining a transmission time of an ultrasonic wave in a predetermined path

S120 —— respectively obtaining distances between the detecting base points and the dynamic reference point

S130 —— obtaining real-time coordinate parameters of the concrete outlet in the reference coordinate system

Fig. 2

Fig. 3

S111 — a first ultrasonic wave transmitter located at each detecting base point sending the ultrasonic wave with a predetermined frequency

S112 — a first ultrasonic wave receiver located at the dynamic reference point receiving the ultrasonic wave with the predetermined frequency

S113 — obtaining the transmission time of the ultrasonic wave going between each detecting base point and the dynamic reference point

S120 — respectively obtaining distances between the detecting base points and the dynamic reference point

S130 — obtaining real-time coordinate parameters of the concrete outlet in the reference coordinate system

Fig. 4

S111 — a first ultrasonic wave transmitter located at the dynamic reference point sending the ultrasonic wave

S112 — a first ultrasonic wave receiver located at each detecting base point receiving the ultrasonic wave

S113 — obtaining the transmission time of the ultrasonic wave going between the dynamic reference point and each detecting base point

S120 — respectively obtaining distances between the detecting base points and the dynamic reference point

S130 — obtaining real-time coordinate parameters of the concrete outlet in the reference coordinate system

**Fig. 5**

S111 — a first ultrasonic wave transmitter located at each detecting base point sending an initial ultrasonic wave

S112 — a first ultrasonic wave receiver located at the dynamic reference point receiving the initial ultrasonic wave, and after the initial ultrasonic wave is received, a predetermined second ultrasonic wave transmitter sending a feedback ultrasonic wave

S113 — a second ultrasonic wave receiver of each detecting base point receiving the feedback ultrasonic wave sent by each second ultrasonic wave transmitter

S114 — obtaining the transmission time of the ultrasonic wave going from each detecting base point to the dynamic reference point and then returning to the detecting base point

S120 — respectively obtaining distances between the detecting base points and the dynamic reference point

S130 — obtaining real-time coordinate parameters of the concrete outlet in the reference coordinate system

Fig. 6

S111 — a first ultrasonic wave transmitter of the dynamic reference point sending an initial ultrasonic wave

S112 — a first ultrasonic wave receiver of each detecting base point receiving the initial ultrasonic wave, and after the initial ultrasonic wave is received, a predetermined second ultrasonic wave transmitter sending a feedback ultrasonic wave

S113 — a second ultrasonic wave receiver of the dynamic reference point receiving the feedback ultrasonic wave sent by each second ultrasonic wave transmitter

S114 — obtaining the transmission time of the ultrasonic wave going from the dynamic reference point to each detecting base point and then returning to the dynamic reference point

S120 — respectively obtaining distances between the detecting base points and the dynamic reference point

S130 — obtaining real-time coordinate parameters of the concrete outlet in the reference coordinate system

Fig. 7

S100 — concrete pump truck being in predetermined state

concrete pump truck being in operation state — S100a

S120a

S110 — obtaining transmission time of ultrasonic wave in predetermined path

S120 — respectively obtaining distances between detecting base points and dynamic reference point

S130 — obtaining real-time coordinate parameters of concrete outlet in reference coordinate system

obtaining preset transmission velocity of ultrasonic wave according to obtained transmission time of ultrasonic wave in predetermined path and designated coordinate parameters

Fig. 8

S109 — determining initial coordinate parameters of the concrete outlet

S110 — obtaining a transmission time of an ultrasonic wave in a predetermined path

S120 — respectively obtaining distances between the detecting base points and the dynamic reference point

S130 — obtaining real-time coordinate parameters of the concrete outlet in the reference coordinate system

S140 — obtaining a real-time movement direction and a real-time movement velocity of the concrete outlet

S150 — allowing the initial coordinate parameters to be the same as the real-time coordinate parameters

**Fig. 9**

910 — processor

920 — time counter

930 — dynamic sensor

fixed-point sensor

fixed-point sensor

fixed-point sensor

940

**Fig. 10**

Fig. 11

Fig. 12

910

processor

920

time counter

930

dynamic
sensor

fixed-point
sensor

fixed-point
sensor

fixed-point
sensor

940

Fig. 13

910

processor

920

time counter

930

dynamic
sensor

fixed-point
sensor

fixed-point
sensor

fixed-point
sensor

940

Fig. 14

910 — processor ← storage unit — 950

920 — time counter → designated unit — 960

930 — dynamic sensor → fixed-point sensor / fixed-point sensor / fixed-point sensor — 940

**Fig. 15**

**EP 2 357 486 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 1975070
- DE 4306127 A
- US 5823218 A
- WO 2008110397 A
- US 6202013 B1
- US 20090190441 A1
- US 20090295639 A1